# EUROPEAN PATENT SPECIFICATION

(11) **EP 4 210 028 B1**
(45) Date of publication and mention of the grant of the patent: **11.06.2025**
(21) Application number: 20957719.6
(22) Date of filing: 16.10.2020
(51) Int. Cl.: H04L 9/08, G09C 1/00

(54) **SECURE SHIFT SYSTEM, SECURE SHIFT APPARATUS, SECURE SHIFT METHOD, AND PROGRAM**
SICHERES VERSCHIEBUNGSSYSTEM, SICHERE VERSCHIEBUNGSVORRICHTUNG, SICHERES VERSCHIEBUNGSVERFAHREN, UND PROGRAMM
SYSTÈME DE DÉCALAGE SÉCURISÉ, DISPOSITIF DE DÉCALAGE SÉCURISÉ, PROCÉDÉ DE DÉCALAGE SÉCURISÉ, ET PROGRAMME

(43) Date of publication of application: 12.07.2023
(73) Proprietor: Nippon Telegraph And Telephone Corporation, Chiyoda-ku Tokyo 100-8116 (JP)
(72) Inventor: IKARASHI, Dai, Musashino-shi, Tokyo 180-8585 (JP)
(74) Representative: MERH-IP Matias Erny Reichl Hoffmann Patentanwälte PartG mbB
(86) International application number: PCT/JP2020/039077
(87) International publication number: WO 2022/079890

(56) References cited:
- WO-A1-2020/075797
- DALSKOV ANDERS ET AL: "Secure Evaluation of Quantized Neural Networks", PROCEEDINGS ON PRIVACY ENHANCING TECHNOLOGIES, vol. 2020, no. 4, 1 October 2020 (2020-10-01), pages 355 - 375, XP055932904, Retrieved from the Internet <URL:https://eprint.iacr.org/archive/2019/131/1592911486.pdf> [retrieved on 20220620], DOI: 10.2478/popets-2020-0077
- ESCUDERO DANIEL ET AL: "Improved Primitives for MPC over Mixed Arithmetic-Binary Circuits", 10 August 2020, ADVANCES IN CRYPTOLOGY - CRYPTO 2020; [LECTURE NOTES IN COMPUTER SCIENCE; LECT.NOTES COMPUTER], SPRINGER INTERNATIONAL PUBLISHING, CHAM, PAGE(S) 823 - 852, ISBN: 978-3-030-56879-5, ISSN: 0302-9743, XP047666915
- DALSKOV ANDERS, ESCUDERO DANIEL, KELLER MARCEL: "Secure Evaluation of Quantized Neural Networks", PROCEEDINGS ON PRIVACY ENHANCING TECHNOLOGIES, vol. 2020, no. 4, 1 October 2020 (2020-10-01), pages 355 - 375, XP055932904, DOI: 10.2478/popets-2020-0077
- "Computer vision - ECCV 2020 : 16th European conference, Glasgow, UK, August 23-28, 2020 : proceedings", vol. 29, 10 August 2020, SPRINGER INTERNATIONAL PUBLISHING, Cham, ISBN: 978-3-030-58594-5, article ESCUDERO DANIEL; GHOSH SATRAJIT; KELLER MARCEL; RACHURI RAHUL; SCHOLL PETER: "Improved Primitives for MPC over Mixed Arithmetic-Binary Circuits", pages: 823 - 852, XP047558542, DOI: 10.1007/978-3-030-56880-1_29
- "Pattern Recognition : 5th Asian Conference, ACPR 2019, Auckland, New Zealand, November 26–29, 2019, Revised Selected Papers, Part II", vol. 10946, 1 January 2018, SPRINGER INTERNATIONAL PUBLISHING, Cham, ISBN: 978-3-030-41298-2, ISSN: 0302-9743, article KIKUCHI RYO, IKARASHI DAI, MATSUDA TAKAHIRO, HAMADA KOKI, CHIDA KOJI: "Efficient Bit-Decomposition and Modulus-Conversion Protocols with an Honest Majority : 23rd Australasian Conference, ACISP 2018, Wollongong, NSW, Australia, July 11-13, 2018, Proceedings", pages: 64 - 82, XP055932868, DOI: 10.1007/978-3-319-93638-3_5

## Description

### [Technical Field]

The present invention relates to a secure computation technique, and more particularly to a technique for performing a bit shift operation in the secure computation.

### [Background Art]

The secure computation is a method for obtaining a result of a designated operation without restoring an encrypted numerical value (for example, refer to a reference NPL 1). In the method of the reference NPL 1, encryption is performed in which a plurality of pieces of information capable of restoring a numerical value are distributed to three secure computation apparatuses, and a result of an addition/subtraction, a constant addition, a multiplication, a constant multiplication, a logical operation (a negation, a logical product, a logical sum, an exclusive or), a data format conversion (an integer, a binary number) can be held in a state of being distributed in the three secure computation apparatuses without restoring the numerical value, that is, in an encrypted state. In general, the number of sharing is not limited to three, and can be set to W (W is a predetermined constant value of three or more), and a protocol for realizing the secure computation by cooperative computation by W secure computation apparatuses is called a multi-party protocol.

(Reference NPL 1 : Koji Chida, Koki Hamada, Dai Igarashi, Katsumi Takahashi, "Reconsideration of Light-Weight Verifiable Three-Party Secure Function Evaluation", In CSS, 2010) Conventionally, there are NPL 1 and NPL 2 as references related to the protocols and implementation of the secure computation for performing floating point computation. The bit shift operation required for performing the floating point operation is an operation for shifting a binary number bit pattern to the left and right, and is one of basic operations in computer processing. NPL 3 generally discloses benchmarks to understand the exact trade-offs between different corruption models, network sizes, and efficiency.

### [Citation List]

### [Non Patent Literature]

[NPL 1] Takuma Amada, Masahiro Nara, Takashi Nishide, Hiroshi Yoshiura, "Multiparty Computation for Floating Point Arithmetic with Less Communication over Small Fields", Journal of Information Processing, Vol. 60, No. 9, pp. 1433-1447, 2019
[NPL 2] Randmets, J., "Programming Languages for Secure Multi-party Computation Application Development," PhD thesis. University of Tartu, 2017
[NPL 3] DALSKOV ANDERS ET AL: "Secure Evaluation of Quantized Neural Networks", PROCEEDINGS ON PRIVACY ENHANCING TECHNOLOGIES, vol. 2020, no. 4, 1 October 2020 (2020-10-01), pages 355-375[Summary of Invention]

### [Technical Problem]

However, when the bit shift operation is executed by the secure computation, the computation cost is large because the operation is performed while concealing the right and left shift directions and the shift amount.

An object of the present invention is to provide a secure computation technique for performing a bit shift operation at a high speed by using a protocol for performing a left shift with a numerical value and a shift amount to be shifted as inputs.

### [Solution to Problem]

The present invention provides secure shift systems, a secure shift apparatus, a secure shift method, and a program, having the features of respective independent claims.

One aspect of the present invention is a secure shift system that is configured of three or more secure shift apparatuses where P is a prime number, p is a number of bits of the prime number P, Q is an order of a factor ring, M is an upper limit value which can be taken by the MSB position of numerical values to be inputted, M' is an upper limit value of the MSB position which is allowable by shares, and [R, R'] is a range of the right shift amount which is covered by the divided right shift and computes a share [[s]]^{P} of a numerical value s (where, s= 2^{ρ}a) obtained by shifting a numerical value a by p bits from a share [[a]]^{P} of the numerical value a and a share <<ρ>>^{Q} of the shift amount p (where, in a case of p ≥ 0, ρ represents the left shift, and in a case of p < 0, p represents the right shift), and include a modulus conversion means for computing a share <<ρ>>^{p} from the <<ρ>>^{Q}, a first flag computation means for computing shares [[f₀]]²= [[(ρ ≥ - R')]]², [[f₁]]²= [[(p ≥ -R'+u)]]², ..., [[f_{d-1}]]²= [[(ρ ≥ -R'+(d-1)u]]², and [[f_{L}]]²= [[(ρ ≥ -R+1)]]² from the share <<ρ>>^{Q} or the share <<ρ>>^{p}, the range [R, R'], a numerical value u, and a numerical value d where u is an integer satisfying u ≤ M'-M+1 and d is an integer satisfying d ≥ ceiling(((R'-R+1)/u)_{Re}), a second flag computation means for computing shares <<f₁>>^{p}, <<f₂>>^{p}, ..., <<f_{d-1}>>^{p}, <<f_{L}>>^{p} from the shares [[f₁]]², [[f₂]]², ..., [[f_{d-1}]]², [[f_{L}]]², a shift amount computation means for computing a share <<ρ'>>^{p}= <<ρ>>^{p}+R'-u(Σ_{1≤i<d}<<fᵢ>>^{p})+((d-1)u-R')<<f_{L}>>^{p} from the share <<ρ>>^{p}, the shares <<f₁>>^{p}, <<f₂>>^{p}, ..., <<f_{d-1}>>^{p}, <<f_{L}>>^{p}, the upper limit value R' of the range, the numerical value u, and the numerical value d, a left shift means for computing a share [[b]]^{P}= [[2^{ρ}'a]]^{P} from the share [[a]]^{P} and the share <<ρ'>>^{p}, a right shift means for computing shares [[c₀]]^{P}= [[2^{ρ}'a/2^{R'}]]^{P}, [[c₁]]^{P}= [[2^{ρ'}a/(2^{R'-u})]]^{P}, ..., [[c_{d-1}]]^{P}= [[2^{ρ'}a/(2^{R'-(d-1)u})]]^{P} from the share [[b]]^{P}, the upper limit value R' of the range, the numerical value u, and the numerical value d, a third flag computation means for computing shares [[f₀]]^{P}, [[f₁]]^{P}, ..., [[f_{d-1}]]^{P}, [[f_{L}]]^{P} from the shares [[f₀]]², [[f₁]]², ..., [[f_{d-1}]]², [[f_{L}]]², and a shift value computation means for computing the share [[s]]^{P}= [[c₀]]^{P}[[f₀]]^{P}₊([[c₁]]^{P}-[[c₀]]^{P})[[f₁]]^{P}+ ... +([[c_{d-1}]]^{P-}[[c_{d-2}]]^{P})[[f_{d-1}]]^{P}+([[b]]^{P}-[[c_{d-1}]]^{P})[[f_{L}]]^{P} from the share [[b]]^{P}, the shares [[c₀]]^{P}, [[c₁]]^{P}, ..., [[c_{d-1}]]^{P}, and the shares [[f₀]]^{P}, [[f₁]]^{P}, ..., [[f_{d-1}]]^{P}, [[f_{L}]]^{P}.

One aspect of the present invention is a secure shift system that is configured of three or more secure shift apparatuses, where P is a prime number, p is a number of bits of the prime number P, and M is an upper limit value of the shift amount, and computes a share [[s]]^{P} of a numerical value s (where, s= a/2^{ρ}) obtained by shifting a numerical value a to the right by p bits from a share [[a]]^{P} of the numerical value a and a share <<ρ>>^{p} of the shift amount ρ(0 ≤ρ ≤ M is satisfied, and a numerical value 2^{M}a obtained by shifting the numerical value a to the left by M bits does not overflow), and includes a shift amount computation means for computing a share <<M-ρ>>^{p} from the share <<ρ>>^{p} and the upper limit value M, a left shift means for computing a share [[b]]^{P}= [[2^{M-ρ}a]]^{P} from the share [[a]]^{P} and the share <<M -ρ>>^{p}, and a right shift means for computing the share [[s]]^{P}= [[2^{M-ρ}a/2^{M}]]^{P} from the share [[b]]^{P} and the upper limit value M.

One aspect of the present invention is the secure shift system that is configured of three or more secure shift apparatuses, where P is a prime number, p is a number of bits of the prime number P, Q is an order of a factor ring, and M is an upper limit value that can be taken by the MSB position of numerical values to be inputted and computes a share [[s]]^{P} of a numerical value s (where, s= 2^{ρ}a) obtained by shifting a numerical value a by p bits from a share [[a]]^{P} of the numerical value a and a share <<ρ>>^{Q} of the shift amount p (where, in a case of p ≥ 0, p represents the left shift, and in a case of p < 0, p represents the right shift) and includes a modulus conversion means for computing a share <<ρ>>^{p} from the share <<ρ>>^{Q}, a first flag computation means for computing a share [[f_{L}]]²= [[(ρ ≥ 0)]]² from the share <<ρ>>^{Q} or the share <<ρ>>^{p}, a second flag computation means for computing a share <<f_{L}>>^{p} from the share [[f_{L}]]², a shift amount computation means for computing a share <<ρ'>>^{p}= <<ρ>>^{p}+M-M<<f_{L}>>^{p} from the share <<ρ>>^{Q}, the share <<f_{L}>>^{p}, and the upper limit value M, a left shift computation means for computing a share [[b]]^{P}= [[2^{ρ'}a]]^{P} from the share [[a]]^{P} and the share <<ρ'>>^{p}, a right shift means for computing a share [[c]]^{P}= [[2^{ρ'}a/2^{M}]]^{P} from the share [[b]]^{P} and the upper limit value M, a third flag computation means for computing a share [[f_{L}]]^{P} from the share [[f_{L}]]², and a shift value computation means for computing the share [[s]]^{P}= [[c]]^{P}+([[b]]^{P}-[[c]]^{P})[[f_{L}]]^{P} from the share [[b]]^{P}, the share [[c]]^{P}, and the share [[f_{L}]]^{P}.

### [Advantageous Effects of Invention]

According to the present invention, the shift operation can be performed at high speed while keeping the numerical value and the shift amount to be shifted secure.

### [Brief Description of Drawings]

[Fig. 1]

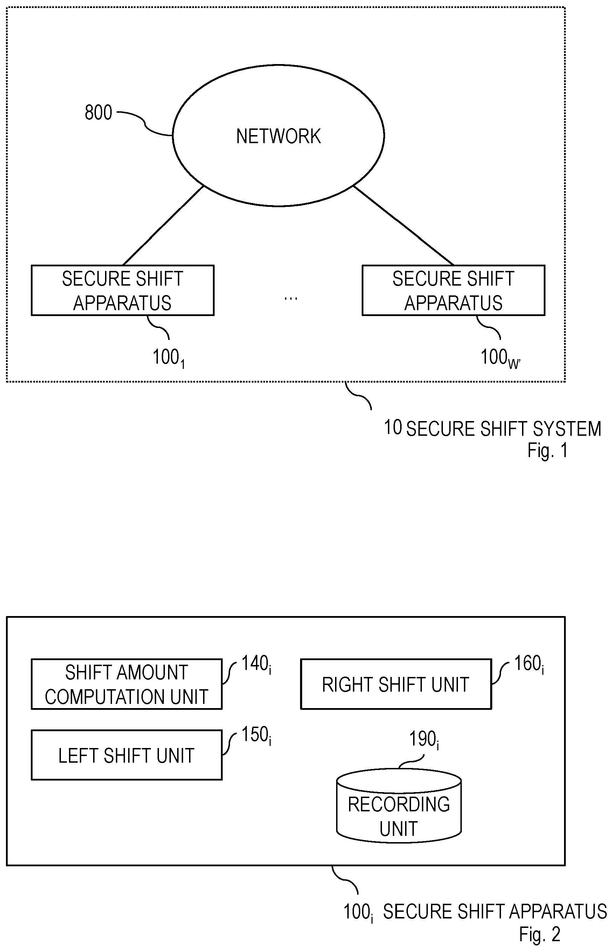

   Fig. 1 is a block diagram showing a configuration of a secure shift system 10.
[Fig. 2]
   Fig. 2 is a block diagram showing a configuration of a secure shift apparatus 100ᵢ.
[Fig. 3]

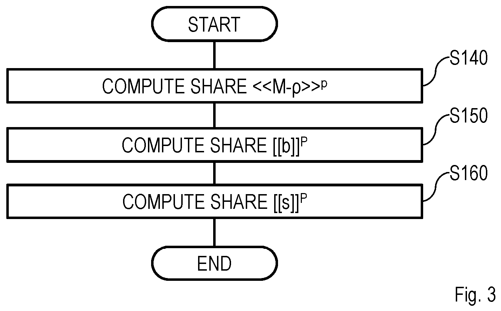

   Fig. 3 is a flowchart showing an operation of the secure shift system 10.
[Fig. 4]

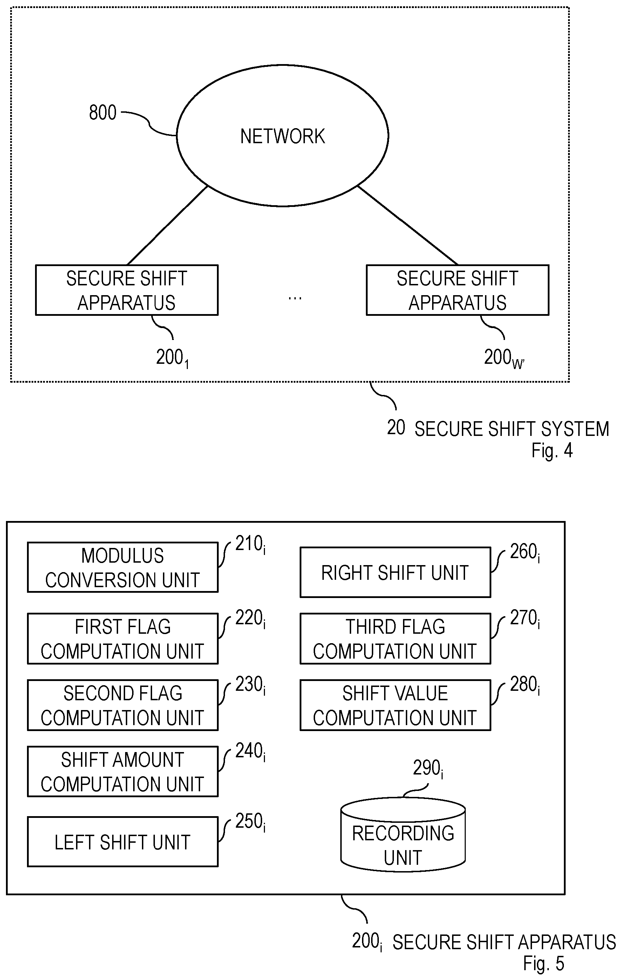

   Fig. 4 is a block diagram showing a configuration of a secure shift system 20.
[Fig. 5]
   Fig. 5 is a block diagram showing a configuration of a secure shift apparatus 200ᵢ.
[Fig. 6]

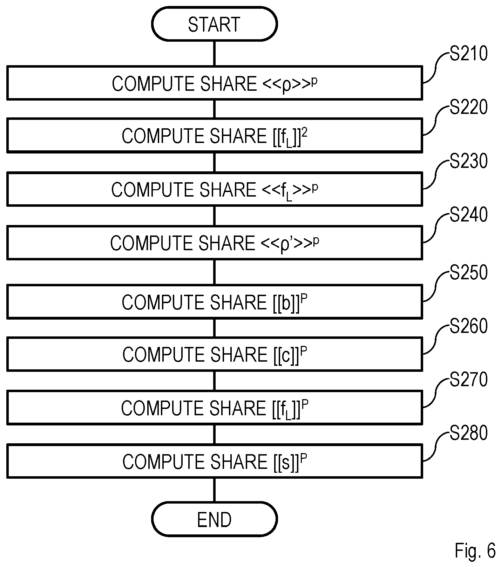

   Fig. 6 is a flowchart showing an operation of the secure shift system 20.
[Fig. 7]

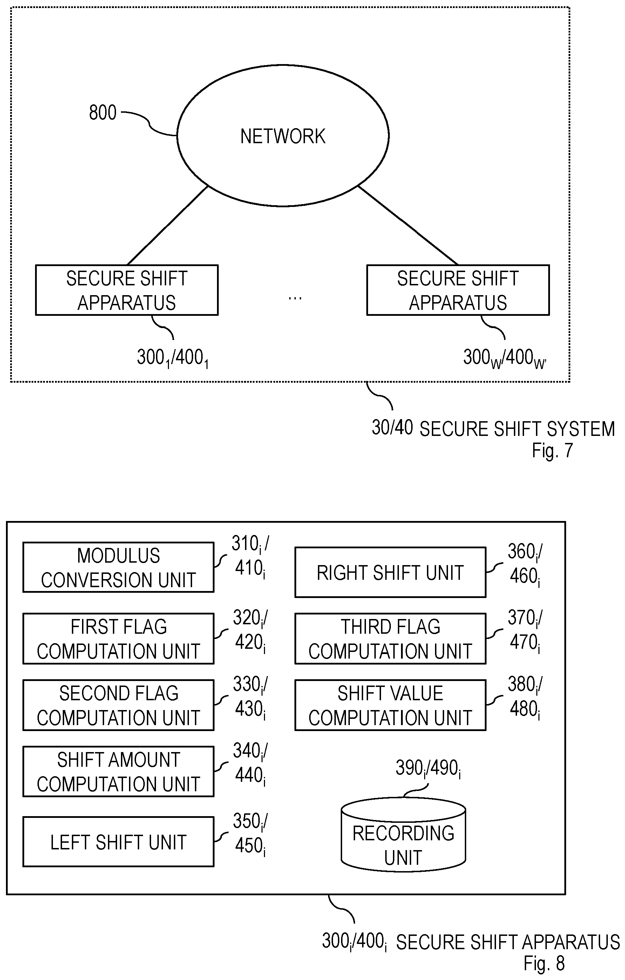

   Fig. 7 is a block diagram showing a configuration of a secure shift system 30.
[Fig. 8]
   Fig. 8 is a block diagram showing a configuration of a secure shift apparatus 300ᵢ.
[Fig. 9]

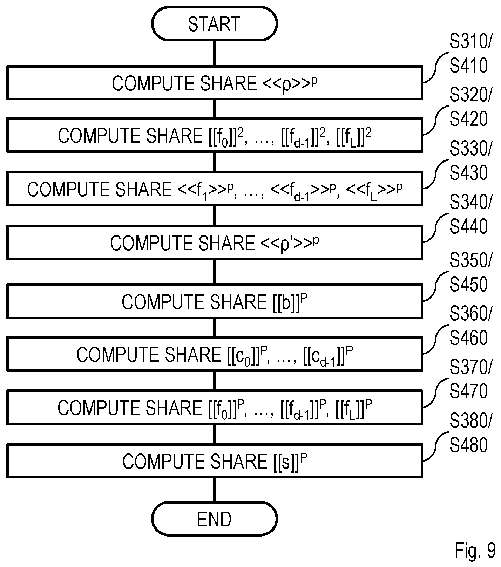

   Fig. 9 is a flowchart showing an operation of the secure shift system 30.
[Fig. 10]

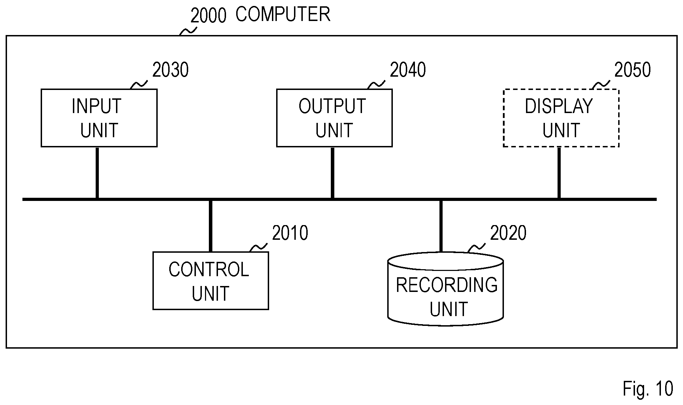

   Fig. 10 is a diagram showing an example of a functional configuration of a computer that realizes each apparatus according to an embodiment of the present invention.

### [Description of Embodiments]

Hereinafter, embodiments of the present invention will be described in detail. Note that configuration units having the same function are denoted by the same number, and redundant description is omitted.

Prior to the description of each embodiment, the notation in the present specification will be explained.

^ (caret) indicates a superscript. For example, x^{y^z} indicates that y^{z} is a superscript to x, and x_{y^z} indicates that y^{z} is a subscript to x. In addition, _ (underscore) indicates a subscript. For example, x^{y_z} indicates that y_{z} is a superscript to x, and x_{y_z} indicates that y_{z} is a subscript to x.

Superscripts "^" and "~" for a certain letter x, as in "^x" and "~x", should originally be written directly above "x", but are written as "^x" and "~x" due to the restrictions of the descriptive notation of the specification.

### <Technical Background>

The secure computation in each embodiment of the present invention is constructed using an existing secure computation protocol. Hereinafter, a notation will be described.

### <<Notation>>

P is a prime number. For example, it is preferable to set a Melsenne prime number P = 2⁶¹-1. p is a number of bits of the prime number P. Note that p may be expressed by p= |P|. When P is the Mersenne prime number, p is the prime number. For example, if P= 2⁶¹-1, p= 61 is obtained. Also, Q is an order of a ring factor. The order Q is used as the prime number P and its number of bits p. In addition, the order Q can be used for the exponent part of the floating point. When the order Q is used for the exponent part of the floating point, for example, Q can be set to Q= 2¹³ - 1.

k is set to a threshold value of a secret sharing. For example, it is preferable to set k= 2. In addition, n is set to a number of sharing of the secret sharing (that is, a number of parties of the secure computation). For example, it is preferable that n is set to n= 3.

[[x]]^{y} represents a share in which a mod y element x is performed by (k, n)-secret sharing. As a method of the secret sharing, for example, Shamir secret sharing or replicated secret sharing can be used. The share of (k, n)-replicated secret sharing is expressed by <<x>>^{y}. Since (k, n)-replicated secret sharing is (k, n)-secret sharing, a protocol applicable to (k, n)-secret sharing can be applied to the share in which (k, n)-replicated secret sharing is performed. Note that when the share is expressed as <<x>>>^{y}, it means that the property of the replicated secret sharing is utilized. In particular, (k, k)-replicated secret sharing is called (k, k)-additive secret sharing. The mod y element x is expressed as a share <x>^{y} in which (k, k)-additive secret sharing is performed.

[[X]]^{2^m} represents a share in which m shares in the form of [[x]]² are arranged. In some cases, [[x]]^{2^m} is regarded as a bit representation of a numerical value.

x ≒ y indicates that x and y are equal as real numbers on a computer. That is, the difference between x and y is within a certain error range.

For two numbers a, d, a/d represents the value of integer division for truncating a fraction after the decimal part. Therefore, the integer division by the exponent of two is equivalent to the right shift. In addition, (a/d)_{Re} represents the value of real number division for the two numbers a, d.

For the number a, ceiling(a) represents the minimum integer of a or more.

(prop) expresses that in a case where proposition prop is satisfied, (prop) is set to 1, and in a case where proposition prop is not satisfied, (prop) is set to 0. For example, (1 > 0) is 1.

Floating point 2^{b}a (where, a and b represent a mantissa part and an exponent part respectively) are represented as floating point (a, b). Further, m floating points 2^{b_0}a₀, 2^{b_1}a₁, ..., 2^{b_m-1}aₘ₋₁ (where, aᵢ and bᵢ (0≤ i <m) represent the mantissa part and the exponent part respectively) represents a floating point vector (^{->}a, ^{->}b) (where, ^{->}a= (a₀, a₁, ..., aₘ₋₁), ^{->}b = (b₀, b₁, ..., bₘ₋₁) is satisfied). The length m of the vector ^{->}a= (a₀, a₁, ..., aₘ₋₁) may be expressed as |^{->}a|.

### <<Existing Secure Computation Protocol>>

First, an existing secure computation protocol used in the present invention will be described. The existing secure computation protocol is used for an addition/subtraction, a constant addition, a multiplication, a constant multiplication, a logical operation (a negation, a logical product, a logical sum, an exclusive or), a data format conversion (an integer, a binary number), and a computation of an exponential function. The following protocol is used as an existing protocol used in the present invention.

### [Conversion from (k, n)-secret sharing (the replicated secret sharing) to (k, k)-additive secret sharing]

Input: a share [[x]]^{y} of a numerical value x (a share <<x>>^{y} of a numerical value x)
Output: a share <x>^{y} of the numerical value x
Specifically, there is a method described in the reference NPL 2.

(Reference NPL 2: Kikuchi, R., Igarashi, D., Matsuda, T., Hamada, K. and Chida, K., "Efficient Bit-Decomposition and Modulus-Conversion Protocols with an Honest Majority," 23rd Australasian Conference on Information Security and Privacy(ACISP 2018), Lecture Notes in Computer Science, Vol. 10946, Springer, pp. 64-82, 2018)

### [Conversion from (k, k)-additive secret sharing to (k, n)-secret sharing (the replicated secret sharing)]

Input: a share <x>^{y} of a numerical value x
Output: a share [[x]]^{y} of the numerical value x (a share <<x>>^{y} of the numerical value x)
Specifically, there is a method described in the reference NPL 2.

### [Conversion from mod 2 to mod q]

Input: a share [[x]]² of a numerical value x (a share <<x>>² of the numerical value x)
Output: a share [[x]]^{q} of the numerical value x (a share <<x>>^{q} of the numerical value x)
Specifically, there is a method described in the reference NPL 2.

### [Shift Amount Disclosure Right Shift]

Input: a share [[x]]^{q} of a numerical value x, and a shift amount p
Output: a share [[x/2^{ρ}]]^{q} of a numerical value obtained by shifting the numerical value x to the right by p bits Specifically, there is a method described in the reference NPL 3.

(Reference NPL 3: Ibuki Mishina, Dai Igarashi, Koki Hamada, Ryo Kikuchi, "Designs and Implementations of Efficient and Accurate Secret Logistic Regression", CSS2018, 2018)

### [Batch Shift Amount Disclosure Right Shift]

Input: A share [[x]]^{q} of a numerical value x, a shift amount ρ₀, ..., ρₘ₋₁
Output: shares [[x/2^{ρ_0}]]^{q}, ..., [[x/2^{ρ_m-1}]]^{q} of numerical values obtained by right-shifting the numerical value x by ρ₀ bits, ..., ρₘ₋₁ bits
Specifically, there is a method described in the reference NPL 4.

(Reference NPL 4: Dai Igarashi, "The elementary functions of the secure computation over M op/s", SCIS2020, 2020)
Note that as a self-evident method, a batch shift amount disclosure right shift can be formed by repeating the shift amount disclosure right shift.

### [Modulus Conversion Using the Quotient Transfer]

Input: a share << x >>^{q} of a numerical value x
Output: a share <<x>>^{r} of the numerical value x
Specifically, there is a method described in the reference NPL 2.

### [Bit Decomposition]

Input: a share [[x]]^{q} of a numerical value x
Parameter: the maximum number of bits M of inputted numerical values
Output: a share [[x]]^{2^M} of the numerical value x Specifically, there is a method described in the reference NPL 2.

<<Secure Computation Protocol of the Present Invention>> Subsequently, the secure computation protocol of the present invention will be described.

### [Multiplicative Rotation (Shift Amount Secure Left Shift)]

Input: a share [[a]]^{P} of a numerical value a and a share <<ρ>>^{p} of a rotation amount (a shift amount) p (≥ 0)
Output: a share [[2^{ρ}a]]^{P} of a numerical value obtained by left-shifting the numerical value a by p bits
Although the share to be output can be computed by using a protocol such as multiplication or exponential function computation, the share can be computed by using a method using the idea of a random substitution (refer to reference NPL 5). As a specific example, a case where n= 3 will be described.

(Reference NPL 5: Dai Igarashi, Koki Hamada, Ryo Kikuchi, Koji Chida, "The improvement of the secure computation basic sort directed to statistical processing of 1 second of response to the Internet environment", SCI2014, 2014)

### (Round 1)

step 1: A share [[a]]^{P} is converted into (k, k)-additive secret sharing <a>^{P} in which the parties 0 and 1 share.

step 2: The party 0 and party 1 share a random number r₀₁. In addition, the parties 1 and 2 share a random number r₁₂.

step 3: The party 0 compute b₀= 2^{(<<ρ>>^p)}-⁰¹<a>^{P}₀-r₀₁, and sends b₀ to the party 2.

Here, <<ρ>>^{p}₀₁ represents the share held by the party 0 and party 1 with respect to the share <<p>>^{p}. In addition, <a>^{P}₀ represents the share held by the party 0 with respect to the share <a>^{P}.

step 4: The party 1 computes b₁=2^{(<<ρ>>^p)_12}(2^{(<<ρ>>^p)}-⁰¹<a>^{P}₁+r₀₁)-r₁₂, and sends b₁ to the party 0.

Here, <<ρ>>^{p}₁₂ represents the share held by the party 1 and party 2 with respect to the share <<p>>^{p}. In addition, <a>^{P}₁ represents the share held by the party 1 with respect to the share <a>^{P}.

### (Round 2)

step 5: The party 0 computes <c>^{P}₀= 2^{(<<ρ>>^p)}-²⁰b₁.

Here, <<ρ>>^{p}₂₀ represents the share held by the party 2 and party 0 with respect to the share <<p>>^{p}.

Step 6: The party 2 computes <c>^{P}₂= 2^{(<<ρ>>^p)}₋²⁰(2^{(<<ρ>>^p)}-¹²b₀₊r₁₂).

### (Round 3)

Step 7: The share <c>^{P} is converted into a share [[c]]^{P} of (k, n)-secret sharing.

Here, c= 2^{ρ}a is satisfied.

### [Shift Amount Secure Right Shift]

Input: a share [[a]]^{P} of a numerical value a, and a share <<ρ>>^{p} of a shift amount p.
Parameter: an upper limit value M of the shift amount

However, it is assumed that 0 ≤ p ≤ M, and a numerical value 2^{M}a obtained by shifting the numerical value a to the left by M bits does not overflow.

Output: a share [[a/2^{ρ}]]^{P} of a numerical value obtained by shifting the numerical value a to the right by p bits
step 1: <<M-ρ>>^{p} is computed.
step 2: a share [[2^{M}-^{ρ}a]]^{P} of a numerical value obtained by left-shifting the numerical value a by M-p bits is computed by using the multiplicative rotation.
step 3: a share [[a/2^{ρ}]]^{P}= [[2^{M-ρ}a/2^{M}]]^{P} of a numerical value obtained by shifting the numerical value 2^{M-ρ}a to the right by M bits is computed by using shift amount disclosure right shift.

### [Shift Amount Secure Shift (Part 1)]

Input: a share [[a]]^{P} of a numerical value a, and a share <<ρ>>^{Q} of a shift amount p (where, in a case of p ≥ 0, p represents the left shift, and in a case of p < 0, p represents the right shift).
Parameter: an upper limit M that can be taken in the MSB (Most Significant Bit) position of numerical values to be inputted
Output: a share [[s]]^{P} of a numerical value s obtained by shifting the numerical value a by p bits
Here, s= 2^{ρ}a is satisfied.

step 1: a share <<ρ>>^{p} is computed by using the modulus conversion. For example, a modulus conversion using the above-mentioned quotient transition can be used for the modulus conversion.

step 2: [[f_{L}]]²= [[( p ≥ 0)]]² is computed by the comparison of the size.

step 3: <<f_{L}>>^{p} is computed by using the mod 2 -> mod p conversion.

step 4: <<ρ'>>^{p}= <<ρ>>^{ρ}+M-M<<f_{L}>>^{p} is computed.

step 5: [[b]]^{P}= [[2^{ρ'}a]]^{P} is computed by using the multiplicative rotation.

step 6: [[c]]^{P}= [[2^{ρ'}a/2^{M}]]^{P} is computed by using the shift amount disclosure right shift.

step 7: [[f_{L}]]^{P} is computed by using mod 2 -> mod P conversion.

step 8: [[s]]^{P}= [[c]]^{P}+([[b]]^{P}-[[c]]^{P})[[f_{L}]]^{P} is computed.

This equation is a selection gate, and in a case of p < 0, s= c is satisfied, and in a case of p ≥ 0, s= b is satisfied.

### [Shift Amount Secure Shift (Part 2)]

Input: a share [[a]]^{P} of a numerical value a, and a share <<ρ>>^{Q} of a shift amount p (where, in a case of p ≥ 0, p represents the left shift, and in a case of p < 0, p represents the right shift).
Parameter: an upper limit value M which can be taken by the MSB position of numerical values to be inputted, and an upper limit value M' of the MSB position allowed by shares Output: a share [[s]]^{P} of a numerical value s obtained by shifting the numerical value a by p bits
Here, s= 2^{ρ}a is satisfied.

step 1: u= M'-M+1, d= ceiling(((M-1)/u)_{Re}) are computed.

Here, u is the right shift amount which can be covered by one shift amount secure right shift (specifically, the amount in the range of 1 to M'-M bits), and d is the number of execution times of the shift amount secure right shift necessary for performing the right shift in the range of 1 to M-1 bits.

step 2: a share <<ρ>>^{p} is computed by using the modulus conversion. For example, a modulus conversion using the above-mentioned quotient transition can be used for the modulus conversion.

step 3: [[f₀]]²= [[(ρ ≥ -M+1)]]², [[f₁]]²= [[(ρ ≥ -M+1+u)]]², ..., [[f_{d-1}]]²= [[(ρ ≥ -M+1+(d-1)u)]]², [[f_{L}]]²= [[(p ≥ 0)]]² are computed by the comparison of the size.

Here, in the case of f_{L}, f_{d-1}, in the case of f_{d-1}, f_{d-2}, ... are established. The f₀, f₁, ..., f_{d-1}, and f_{L} are referred to as transitive flags.

step 4: <<f₁>>^{p}, <<f₂>>^{p}, ..., <<f_{d-1}>>^{p}, <<f_{L}>>^{p} are computed by using the mod 2-> mod p conversion.

In this step, the computation of <<f₀>>^{p} is not required.

step 5: <<ρ'>>^{p}= <<p>>^{p}+M-1-u(Σ₁s_{I<d}<<fᵢ>>^{p})+((d-1)u-M+1) <<f_{L}>>^{p} is computed.

step 6: [[b]]^{P}= [[2^{ρ'}a]]^{P} is computed by using the multiplicative rotation.

step 7: [[c₀]]^{P}= [[2^{ρ'}a/2^{M-1}]]^{P}, [[c₁]]^{P}= [[2^{ρ'}a/(2^{M-1-u})]]^{P}, ..., [[c_{d-1}]]^{P}= [[2^{ρ'}a/(2^{M-1-(d-1)u})]]^{P} are computed by using a batch shift amount disclosure right shift.

step 8: [[f₀]]^{P}, [[f₁]]^{P}, ..., [[f_{d-1}]]^{P}, [[f_{L}]]^{P} are computed by using the mod 2-> mod P conversion.

In this step, the computation of [[f₀]]^{p} is necessary.

step 9: [[s]]^{P}= [[c₀]]^{P}[[f₀]]^{P}+([[c₁]]^{P}-[[c₀]]^{P})[[f₁]]^{P}+ ... +([[c_{d-1}]]^{P-}[[c_{d-2}]]^{P})[[f_{d-1}]]^{P}+([[b]]^{P}-[[c_{d-1}]]^{P})[[f_{L}]]^{P} is computed.

This expression is a selection gate for transitive flags f₀, f₁, ..., f_{d-1}, f_{L}, when all of f₀, f₁, ..., f_{d-1}, f_{L} are 0, s= 0 is satisfied, in the case of f₀, s= c₀, in the case of f₁, s= c₁, ..., in the case of f_{L}, s= b is satisfied, respectively.

### [Shift Amount Secure Shift (Part 3)]

Input: a share [[a]]^{P} of a numerical value a, and a share <<ρ>>^{Q} of a shift amount p (where, in a case of p ≥ 0, p represents the left shift, and in a case of p < 0, p represents the right shift).
Parameter: an upper limit value M which can be taken by the MSB position of numerical values to be inputted, and an upper limit value M' of the MSB position allowed by shares Output: a share [[s]]^{P} of a numerical value s obtained by shifting the numerical value a by p bits
Here, s= 2^{ρ}a is satisfied.

step 1: u is an integer satisfying u ≤ M'- M+1. Further, [R,

R'] is a range of the right shift amount covered by the divided right shift, and d is an integer satisfying d ≥ ceiling(((R'-R+1)/u)_{Re}).

Hereinafter, {}_{L} indicates that when the shift amount larger than -R need not be taken into consideration (for example, when it is known that the shift is right shift), the computation of the portion surrounded by the parentheses can be omitted. In addition, {}₀ indicates that when the shift amount smaller than -R' is not required to be considered (for example, when the right shift amount is larger than the value to which the shift amount secure shift (Part 1) can be applied but is not an extremely large value), the computation of the portion surrounded by the parentheses can be omitted.

step 2: a share <<ρ>>^{p} is computed by using the modulus conversion. For example, a modulus conversion using the above-mentioned quotient transition can be used for the modulus conversion.

step 3: {[[f₀]]²= [[(p ≥ -R')]]²,}₀ [[f₁]]²= [[(p ≥ -R'+u)]]², ..., [[f_{d-1}]]²= [[(p ≥ -R'+(d-1)u)]]²{,[[f_{L}]]²= [[(p ≥ -R+1)]]²}_{L} is computed by the comparison of the size.

Here, in the case of f_{L}, f_{d-1}, in the case of f_{d-1}, f_{d-2}, ... are established. The f₀, f₁, ..., f_{d-1}, and f_{L} are referred to as transitive flags.

step 4: <<f₁>>^{p}, <<f₂>>^{p}, ..., <<f_{d-1}>>^{p}{,<<f_{L}>>^{p}}_{L} is computed by using the mod 2 -> mod p conversion.

step 5: <<ρ'>>^{p}= <<ρ>>^{p}+R'-u(Σ_{1≤i<d}<<fᵢ>>^{p}){+((d-1) u-R') <<f_{L}>>^{p}}_{L} is computed.

step 6: [[b]]^{P}= [[2^{ρ}'a]]^{P} is computed by using the multiplicative rotation.

step 7: {[[c₀]]^{P}= [[2^{ρ'}a/2^{R'}]]^{P},}₀ [[c₁]]^{P}= [[2^{ρ'}a/(2^{R'-u})]]^{P}, ..., [[c_{d-1}]]^{P}= [2^{ρ'}a/(2^{R'-(d-1)u})]]^{P} is computed by using the batch shift amount secure right shift.

step 8: {[[f₀]]^{P}, }₀[[f₁]]^{P}, ..., [[f_{d-1}]]^{P}{,[[f_{L}]]^{P}}_{L} is computed by using the mod 2 -> mod P conversion.

step 9: [[s]]^{P}= {[[c₀]]^{P}[[_{f0}]]^{P}+(}₀[[c₁]]^{P}{-[[c₀]]^{P})}₀[[f₁]]^{P}+ ... +([[c_{d-1}]]^{P}-[[c_{d-2}]]^{P})[[f_{d-1}]]^{P}{+([[b]]^{P}-[[c_{d-1}]]^{P})[[f_{L}]]^{P}}_{L} is computed.

This expression is a selection gate for transitive flags f₀, f₁, ..., f_{d-1}, f_{L}, when all of f₀, f₁, ..., f_{d-1}, f_{L} are 0, s= 0 is satisfied, in the case of f₀, s= c₀, in the case of f₁, s= c₁, ..., in the case of f_{L}, s= b is satisfied, respectively.

Note that when R= 1, R'= M-1, u= M'-M+1, and d= ceiling(((R'-R+1)/u)_{Re}) are satisfied, the shift amount secure shift Part 3) becomes the shift amount secure shift (Part 2). Therefore, the shift amount secure shift (Part 3) is a protocol in which the shift amount secure shift (Part 2) is generalized.

### <First Embodiment>

The secure shift system 10 will be described below with reference to Figs. 1 to 3 below. Fig. 1 is a block diagram showing a configuration of the secure shift system 10. The secure shift system 10 includes W (W is a predetermined integer of three or more) pieces of secure shift apparatuses 100₁, ..., 100_{w}. The secure shift apparatuses 100₁,..., 100_{w} are connected to a network 800 and can communicate with each other. The network 800 may be, for example, a communication network such as the Internet or a broadcast communication path. Fig. 2 is a block diagram showing a configuration of the secure shift apparatus 100i (1 ≤ i ≤ W). Fig. 3 is a flowchart showing an operation of the secure shift system 10.

As shown in Fig. 2, the secure shift apparatus 100i includes a shift amount computation unit 140i, a left shift unit 150i, a right shift unit 160i, and a recording unit 190ᵢ. Each configuration unit of the secure shift apparatus 100i excluding the recording unit 190i is configured to execute the operation required for the secure computation, that is, the operation required for realizing the function of each configuration unit among protocols explained in the "Technical Background". The specific functional configuration for realizing individual operations in the present invention is sufficient to be a configuration capable of executing the algorithms disclosed in each of the reference NPL 1 to 5, for example, and since these are a conventional configuration, detailed description thereof will be omitted. Further, the recording unit 190i is the configuration unit that appropriately records information necessary for the processing of the secure shift apparatus 100ᵢ. For example, the upper limit value M of the shift amount, which will be described later, is recorded.

The secure shift system 10 realizes the secure computation of the shift amount secure right shift being the multi-party protocol by cooperative computation by W pieces of secure shift apparatuses 100ᵢ. Therefore, a shift amount computation means 140 (not shown) of the secure shift system 10 is constituted of the shift amount computation units 140₁, ..., 140_{W}, a left shift means 150 (not shown) is constituted of the left shift units 150₁, ..., 150_{W}, and a right shift means 160 (not shown) is constituted of the right shift units 160₁, ..., 160w.

P is a prime number, p is a number of bits of the prime number P, and M is the upper limit value of the shift amount, and the secure shift system 10 computes a share [[s]]^{P} of a numerical value s (where, s= a/2^{ρ}) obtained by right-shifting a numerical value a by p bits from a share [[a]]^{P} of the numerical value a and a share <<ρ>>^{p} of the shift amount p (0 ≤ p ≤ M is satisfied, and a numerical value 2^{M}a obtained by left-shifting the numerical value a by M bits does not overflow). The operation of the secure shift system 10 will be described with reference to Fig. 3, below.

In S140, the shift amount computation means 140 computes a share <<M-ρ>>^{p} from the share <<ρ>>^{p} and the upper limit value M.

In S150, the left shift means 150 computes a share [[b]]^{P}= [[2^{M-ρ}a]]^{P} from the share [[a]]^{P} and the share <<M-ρ>>^{p} computed in S140. The left shift means 150 may be configured to execute, for example, the shift amount secure left shift.

In S160, the right shift means 160 computes the share [[s]]^{P}= [[2^{M-ρ}a/2^{M}]]^{P} from the share [[b]]^{P} computed in S150 and the upper limit value M. For example, the right shift means 160 may be configured to execute the shift amount disclosure right shift.

According to the embodiment of the present invention, the right shift operation can be performed at high speed while keeping the numerical value and the shift amount to be shifted secure.

### <Second Embodiment>

The secure shift system 20 will be described below with reference to Figs. 4 to 6 below. Fig. 4 is a block diagram showing a configuration of the secure shift system 20. The secure shift system 20 includes W (W is a predetermined integer of three or more) pieces of secure shift apparatuses 200₁, ..., 200_{W}. The secure shift apparatuses 200₁,..., 200_{W} are connected to a network 800 and can communicate with each other. The network 800 may be, for example, a communication network such as the Internet or a broadcast communication path. Fig. 5 is a block diagram showing a configuration of the secure shift apparatus 200i (1 ≤ i ≤ W). Fig. 6 is a flowchart showing an operation of the secure shift system 20.

As shown in Fig. 5, the secure shift apparatus 200i includes a modulus conversion unit 210ᵢ, a first flag computation unit 220i, a second flag computation unit 230ᵢ, a shift amount computation unit 240ᵢ, a left shift unit 250i, a right shift unit 260i, a third flag computation unit 270i, a shift value computation unit 280i, and a recording unit 290ᵢ. Each configuration unit of the secure shift apparatus 200i excluding the recording unit 290i is configured to execute the operation required for the secure computation, that is, the operation required for realizing the function of each configuration unit among protocols explained in the "Technical Background". The specific functional configuration for realizing individual operations in the present invention is sufficient to be a configuration capable of executing the algorithms disclosed in each of the reference NPL 1 to 5, for example, and since these are a conventional configuration, detailed description thereof will be omitted. Further, the recording unit 290i is the configuration unit that appropriately records information necessary for the processing of the secure shift apparatus 200ᵢ. For example, the upper limit value M of the MSB position of numerical values to be inputted, which will be described later, is recorded.

The secure shift system 20 realizes the secure computation of the shift amount secure shift (Part 1) being the multi-party protocol by the cooperative computation by the W pieces of secure shift apparatuses 200ᵢ. Therefore, a modulus conversion means 210 (not shown) of the secure shift system 20 is constituted of the modulus conversion units 210₁,..., 210_{W}, a first flag computation means 220 (not shown) is constituted of the first flag computation units 220₁, ..., 220_{W}, a second flag computation means 230 (not shown) is constituted of the second flag computation units 230₁, ..., 230_{W}, a shift amount computation means 240 (not shown) is constituted of the shift amount computation units 240₁,..., 240_{W}, a left shift means 250 (not shown) is constituted of the left shift units 250₁, ..., 250_{W}, a right shift means 260 (not shown) is constituted of the right shift units 260₁, ..., 260_{W}, a third flag computation means 270 (not shown) is constituted of the third flag computation units 270₁, ..., 270_{W}, and a shift value computation means 280 (not shown) is constituted of the shift value computation units 280₁, ..., 280_{W}.

P is a prime number, p is a number of bits of the prime number P, and M is an upper limit value of the MSB position of numerical values to be inputted, and the secure shift system 20 computes a share [[s]]^{P} of a numerical value s (where, s= 2^{ρ}a) obtained by shifting a numerical value a by p bits from a share [[a]]^{P} of the numerical value a and a share <<ρ>>^{Q} of the shift amount p(where, in the case of p ≥ 0, p represents the left shift, in the case of p < 0, p represents the right shift). The operation of the secure shift system 20 will be described with reference to Fig. 6, below.

In S210, the modulus conversion means 210 computes a share <<ρ>>^{p} from the share <<ρ>>^{Q}. The modulus conversion means 210 may be configured to execute the modulus conversion, for example.

In S220, the first flag computation means 220 computes a share [[f_{L}]]²= [[(ρ ≥ 0)]]² from the share <<ρ>>^{Q}. In the first flag computation means 220, it may be configured that a share <<(p ≥ 0)>>^{Q} is computed from the share <<ρ>>^{Q}, a share <<(p ≥ 0)>>^{Q} is computed from the share <<(p ≥ 0)>>^{Q} by using the modulus conversion, and the share<<(p ≥ 0)>>^{Q} can be converted into a share [[f_{L}]]²= [[(p ≥ 0)]]². Note that in place of the share <<ρ>>^{Q}, a share <<ρ>>^{p} maybe used.

In S230, the second flag computation means 230 computes a share <<f_{L}>>^{p} from the share [[f_{L}]]² computed in S220. The second flag computation means 230 may be configured to execute, for example, the mod 2 -> mod p conversion.

In S240, the shift amount computation means 240 computes a share <<ρ'>>^{p}= <<ρ>>^{p}+M-M<<f_{L}>>^{p} from the share <<ρ>>^{p} computed in S210, the share <<f_{L}>>^{p} computed in S230, and the upper limit value M.

In S250, the left shift means 250 computes a share [[b]]^{P}= [[2^{ρ'}a]]^{P} from the share [[a]]^{P} and the share <<ρ'>>^{p} computed in S240. The left shift means 250 may be configured to execute, for example, the shift amount secure left shift.

In S260, the right shift means 260 computes a share [[c]]^{P}= [[2^{ρ'}a/2^{M}]]^{P} from the share [[b]]^{P} computed in S250 and the upper limit value M. For example, the right shift means 260 may be configured to execute the shift amount disclosure right shift.

In S270, the third flag computation means 270 computes a share [[f_{L}]]^{P} from the share [[f_{L}]]² computed in S220. The third flag computation means 270 may be configured to execute, for example, the mod 2 -> mod P conversion.

In S280, the shift value computation means 280 computes the share [[s]]^{P}=[[c]]^{P}+([[b]]^{P}-[[c]]^{P})[[f_{L}]]^{P} from the share [[b]]^{P} computed in S250, the share [[c]]^{P} computed in S260, and the share [[f_{L}]]^{P} computed in S270.

According to the embodiment of the present invention, the shift computation can be performed at high speed while keeping the numerical value and the shift amount to be shifted secure. In particular, although there is a limitation in the amount of right shift, the shift operation can be performed at high speed.

### <Third Embodiment>

The secure shift system 30 will be described below with reference to Figs. 7 to 9 below. Fig. 7 is a block diagram showing a configuration of the secure shift system 30. The secure shift system 30 includes W (W is a predetermined integer of three or more) pieces of secure shift apparatuses 300₁, ..., 300_{W}. The secure shift apparatuses 300₁, ..., 300_{W} are connected to a network 800 and can communicate with each other. The network 800 may be, for example, a communication network such as the Internet or a broadcast communication path. Fig. 8 is a block diagram showing a configuration of the secure shift apparatus 300i (1 ≤ i ≤ W). Fig. 9 is a flowchart showing an operation of the secure shift system 30.

As shown in Fig. 8, the secure shift apparatus 300i includes a modulus conversion unit 310ᵢ, a first flag computation unit 320ᵢ, a second flag computation unit 330ᵢ, a shift amount computation unit 340i, a left shift unit 350ᵢ, a right shift unit 360i, a third flag computation unit 370i, a shift value computation unit 380i, and a recording unit 390ᵢ. Each configuration unit of the secure shift apparatus 300i excluding the recording unit 390i is configured to execute the operation required for the secure computation, that is, the operation required for realizing the function of each configuration unit among protocols explained in the "Technical Background". The specific functional configuration for realizing individual operations in the present invention is sufficient to be a configuration capable of executing the algorithms disclosed in each of the reference NPL 1 to 5, for example, and since these are a conventional configuration, detailed description thereof will be omitted. The recording unit 390i is a configuration unit for recording information necessary for processing of the secure shift apparatus 300ᵢ. For example, an upper limit value M of the MSB position of numerical values to be inputted, which is described later, (a first upper limit value, below), and an upper limit value M' of the MSB position to which shares are allowed (a second upper limit value, below).

The secure shift system 30 realizes the secure computation of the shift amount secure shift (Part 2) being the multi-party protocol by the cooperative computation by the W pieces of secure shift apparatuses 300ᵢ. Therefore, a modulus conversion means 310 (not shown) of the secure shift system 30 is constituted of the modulus conversion units 310₁,..., 310_{W}, a first flag computation means 320 (not shown) is constituted of the first flag computation units 320₁, ..., 320_{W}, a second flag computation means 330 (not shown) is constituted of the second flag computation units 330₁, ..., and 330_{W}, a shift amount computation means 340 (not shown) is constituted of the shift amount computation units 340₁, ..., and 340_{W}, a left shift means 350 (not shown) is constituted of the left shift units 350ᵢ, ..., 350ᵢ, a right shift means 360 (not shown) is constituted of the right shift units 360₁, ..., 360_{W}, a third flag computation means 370 (not shown) is constituted of the third flag computation units 370₁, ..., 370_{W}, and a shift value computation means 380 (not shown) is constituted of the shift value computation units 380₁, ..., 380_{W}.

P is a prime number, p is a number of bits of the prime number P, Q is an order of a factor ring, M is an upper limit value which can be taken by the MSB position of numerical values to be inputted, therefore the secure shift system 30 computes a share [[s]]^{P} of a numerical value s (where, s= 2^{ρ}a) obtained by shifting a numerical value a by p bits from a share [[a]]^{P} of the numerical value a and a share <<ρ>>^{Q} of the shift amount p (where, in the case of p ≥ 0, p represents the left shift, and in the case of p < 0, p represents the right shift). The operation of the secure shift system 30 will be described with reference to Fig. 9, below.

In S310, the modulus conversion means 310 computes a share <<ρ>>^{p} from the share <<ρ>>^{Q}. The modulus conversion means 310 may be configured to execute the modulus conversion, for example.

In S320, the first flag computation means 320 computes a share [[f₀]]²=[[(ρ≧-M+1)]]², [[f₁]]²=[[(ρ≧-M+1+u)]]², ..., [[f_{d-1}]]²=[[(ρ≧-M+1+(d-1)u)]]², [[f_{L}]²=[[(ρ≧0)]]² from the share <<ρ>>^{Q}, the first upper limit value , a numerical value u= M'-M+1, and a numerical value d= ceiling(((M-1)/u)_{Re}). In the first flag computation means 320, it may be configured that, for example, shares <<(p ≥ -M+1)>>^{Q}, <<(p ≥ -M+1+u)>>^{Q}, ..., <<(p ≥ -M+1+(d-1)u)>>^{Q}, <<(p ≥ 0)>>^{Q} are computed from the share <<ρ>>^{Q}, shares <<(p ≥ -M+1)>>², <<(p ≥ -M+1+u)>>², ..., <<(p ≥ -M+1+(d-1)u)>>², <<(p ≥ 0)>>^{Q} are computed from the shares << (p ≥ -M+1)>>^{Q}, <<(p ≥ -M+1+u) >>^{Q}, ..., <<(ρ ≥ -M+1+(d-1)u)>>^{Q}, <<(p ≥ 0)>>^{Q} by using the modulus conversion, and the shares << (p ≥ -M+1)>>², << (p ≥ -M+1+u)>>², ..., << (p ≥ -M+1+(d-1)u)>>², << (p ≥ 0)>>² can be converted into shares [[f₀]]²=[[(ρ ≥ -M+1)]]², [[f₁]]²=[[(ρ ≥ -M+1+u)]]², ..., [[f_{d-1}]]²=[[(ρ ≥ - M+1+(d-1)u)]]², [[f_{L}]]²=[[(ρ ≥ 0)]]². Note that in place of the share <<ρ>>^{Q}, a share <<ρ>>^{p} may be used. The numerical values u and d may be computed from the first upper limit value M and the second upper limit value M' by the first flag computation means 320, or the numerical values u and d may be recorded in the recording unit 390i in advance.

In S330, the second flag computation means 330 computes shares <<f₁>>^{p}, <<f₂>>^{p}, ..., <<f_{d-1}>>^{p}, <<f_{L}>>^{p} from the share [[f₁]]², [[f₂]]², ..., [[f_{d-1}]] ², [[f_{L}]]² computed in S320. The second flag computation means 330 may be configured to execute, for example, the mod 2 -> mod p conversion.

In S340, the shift amount computation means 340 computes a share <<ρ'>>^{p}=<<ρ>>^{p}+M-1-u(Σ_{1≦i<d}<<fᵢ>>^{p})+ ((d-1)u-M+1)<<f_{L}>>^{p} from the share <<ρ>>^{p} computed in S310, the shares <<f₁>>^{p}, <<f₂>>^{p}, ..., <<f_{d-1}>>^{p}, <<f_{L}>>^{p} computed in S330, the first upper limit value M, the numerical value u, and the numerical value d.

In S350, the left shift means 350 computes a share [[b]]^{P}= [[2^{ρ'}a]]^{P} from the share [[a]]^{P} and the share <<ρ>>^{p} computed in S340. The left shift means 350 may be configured to execute, for example, the shift amount secure left shift.

In S360, the right shift means 360 computes shares [[c₀]]^{P}=[[2^{ρ'}a/2^{M-1}]]^{P}, [[c₁]]^{P}=[[2^{ρ'}a/(2^{M**-**1**-**u})]]^{P}, ..., [[c_{d-1}]]^{P}=[[2^{ρ'}a/(2^{M-1-(d-1)u}]]^{P} from the share [[b]]^{P} computed in S350, the first upper limit value M, the numerical value u, and the numerical value d. For example, the right shift means 360 may be configured so as to execute the batch shift amount disclosure right shift.

In S370, the third flag computation means 370 computes shares [[f₀]]^{P}, [[f₁]]^{P}, ..., [[f_{d-1}]]^{P}, [[f_{L}]]^{P} from the share [[f₀]]², [[f₁]]², ..., [[f_{d-1}]]², [[f_{L}]]² computed in S320. The third flag computation means 370 may be configured to execute, for example, the mod 2 -> mod P conversion.

In S380, the shift value computation means 380 computes the share [[s]]^{P}=[[c₀]]^{P}[[f₀]]^{P}+([[c₁]]^{P}-[[c₀]]^{P})[[f₁]]^{P}+...+([[c_{d-1}]]^{P}-[[c_{d-2}]]^{P})[[f_{d-1}]]^{P}+([[b]]^{P}-[[c_{d-1}]]^{P})[[f_{L}]]^{P} from the share [[b]]^{P} computed in S350, the shares [[c₀]]^{P}, [[c₁]]^{P}, ..., [[c_{d-1}]]^{P} computed in S360, and the shares [[f₀]]^{P}, [[f₁]]^{P}, ..., [[f_{d-1}]]^{P}, [[f_{L}]]^{P} computed in S370.

According to the embodiment of the present invention, the shift computation can be performed at high speed while keeping the numerical value and the shift amount to be shifted secure. In particular, the shift operation can be performed at high speed without limitation on the amount of right shift.

### <Fourth Embodiment>

The secure shift system 40 will be described below with reference to Figs. 7 to 9 below. Fig. 7 is a block diagram showing a configuration of the secure shift system 40. The secure shift system 40 includes W (W is a predetermined integer of three or more) pieces of secure shift apparatuses 400₁, ..., 400_{W}. The secure shift apparatuses 400₁, ..., 400_{W} are connected to a network 800 and can communicate with each other. The network 800 may be, for example, a communication network such as the Internet or a broadcast communication path. Fig. 8 is a block diagram showing a configuration of the secure shift apparatus 400i (1 ≤ i ≤ W). Fig. 9 is a flowchart showing an operation of the secure shift system 40.

As shown in Fig. 8, the secure shift apparatus 400i includes a modulus conversion unit 410i, a first flag computation unit 420i, a second flag computation unit 430ᵢ, a shift amount computation unit 440i, a left shift unit 450ᵢ, a right shift unit 460i, a third flag computation unit 470i, a shift value computation unit 480i, and a recording unit 490ᵢ. Each configuration unit of the secure shift apparatus 400i excluding the recording unit 490i is configured to execute the operation required for the secure computation, that is, the operation required for realizing the function of each configuration unit among protocols explained in the "Technical Background". The specific functional configuration for realizing individual operations in the present invention is sufficient to be a configuration capable of executing the algorithms disclosed in each of the reference NPL 1 to 5, for example, and since these are a conventional configuration, detailed description thereof will be omitted. The recording unit 490i is a configuration unit for recording information necessary for processing of the secure shift apparatus 400ᵢ. For example, an upper limit value M of the MSB position of numerical values to be inputted, which is described later, (a first upper limit value, below), and an upper limit value M' of the MSB position to which shares are allowed (a second upper limit value, below). For example, a range of the right shift amount [R', R] covered by the divided right shift, which will be described later, is recorded.

The secure shift system 40 realizes the secure computation of the shift amount secure shift (Part 3) being the multi-party protocol by the cooperative computation by the W pieces of secure shift apparatuses 400ᵢ. Therefore, a modulus conversion means 410 (not shown) of the secure shift system 40 is constituted of the modulus conversion units 410₁,..., 410_{W}, a first flag computation means 420 (not shown) is constituted of the first flag computation units 420₁, ..., 420_{W}, a second flag computation means 430 (not shown) is constituted of the second flag computation units 430₁, ..., and 430_{W}, a shift amount computation means 440 (not shown) is constituted of the shift amount computation units 440₁, ..., and 440_{W}, a left shift means 450 (not shown) is constituted of the left shift units 450ᵢ, ..., 450ᵢ, a right shift means 460 (not shown) is constituted of the right shift units 460₁, ..., 460_{W}, a third flag computation means 470 (not shown) is constituted of the third flag computation units 470₁, ..., 470_{W}, and a shift value computation means 480 (not shown) is constituted of the shift value computation units 480₁, ..., 480_{W}.

P is a prime number, p is a number of bits of the prime number P, Q is an order of a factor ring, M is an upper limit value which can be taken by the MSB position of numerical values to be inputted, [R, R'] is a range of the right shift amount covered by the divided right shift, and the secure shift system 40 computes a share [[s]]^{P} of a numerical value s (where, s= 2^{ρ}a) obtained by shifting a numerical value a to the right by p bits from a share [[a]]^{P} of the numerical value a and a share <<ρ>>^{Q} of the shift amount p (where, in the case of p ≥ 0, p represents the left shift, and in the case of p < 0, p represents the right shift). The operation of the secure shift system 40 will be described with reference to Fig. 9, below.

In S410, the modulus conversion means 410 computes a share <<ρ>>^{p} from the share <<ρ>>^{Q}. The modulus conversion means 410 may be configured to execute the modulus conversion, for example.

In S420, the first flag computation means 420 computes shares [[f₀]]²=[[(ρ≧-R')]]², [[f₁]]²=[[(ρ≧-R'+u)]]², ..., [[f_{d-1}]]²=[[(ρ≧-R'+(d-1)ᵤ)]]², [[f_{L}]]²=[[(ρ≧-R+1)]]² from the share <<ρ>>^{Q} , the range [R, R'], a numerical value u (u is an integer satisfying u < M'-M+1), and a numerical value d (d is an integer satisfying d ≥ ceiling((R'-R+1)/u)_{Re})). In the first flag computation means 420, it may be configured that shares <<(p ≥ -R-')>>^{Q}, <<(ρ ≥ -R'+u)>>^{Q}, ..., <<(ρ ≥ -R'+(d-1)u)>>^{Q}, <<(ρ ≥ - R+1)>>^{Q} are computed from the share <<ρ>>^{Q}, shares <<(p ≥ - R')>>², <<(ρ ≥ -R'+u)>>², ..., <<(ρ ≥ -R'+(d-1)u)>>², <<(ρ ≥ - R+1)>>² are computed from the shares <<(p ≥ -R')>>^{Q}, << (p ≥ - R+u)>>^{Q}, ..., <<(ρ ≥ -R'+(d-1)u)>>^{Q}, <<(ρ ≥ -R+1)>>^{Q} by using the modulus conversion, the shares <<(p ≥ -R')>>², <<(p ≥ - R'+u)>>², ..., <<(p ≥ -R'+(d-1)u)>>², <<(ρ ≥ -R+1)>>² can be converted into shares [[f₀]]²=[[(ρ≥-R')]]², [[f₁]]²=[[(ρ≥-R'+u)]]², ..., [[f_{d-1}]]²=[[(ρ≥-R'+(d-1)u)]]², [[f_{L}]]²=[[(ρ≥-R+1)]]². Note that in place of the share <<ρ>>^{Q}, a share <<ρ>>^{p} may be used. The numerical values u and d may be recorded in the recording unit 490i in advance.

In S430, the second flag computation means 430 computes shares <<f₁>>^{p}, <<f₂>>^{p}, ..., <<f_{d-1}>>^{p}, <<f_{L}>>^{p} from the share [[f₁]]², [[f₂]]², ..., [[f_{d-1}]]², [[f_{L}]]² computed in S420 . The second flag computation means 430 may be configured to execute, for example, the mod 2 -> mod p conversion.

In S440, the shift amount computation means 440 computes a share <<ρ'>>^{p}=<<ρ>>^{p}+R'-u(Σ_{1≦i<d}<<fᵢ>>^{p})+ ((d-1)u-R')<<f_{L}>>^{p} from the share <<ρ>>^{p} computed in S410, the shares <<f₁>>^{p}, <<f₂>>^{p}, ..., <<f_{d-1}>>^{p}, <<f_{L}>>^{p} computed in S430, the upper limit value R' of the range, the numerical value u, and the numerical value d.

In S450, the left shift means 450 computes a share [[b]]^{P}= [[2^{ρ'}a]]^{P} from the share [[a]]^{P} and the share <<ρ'>>^{p} computed in S440. The left shift means 450 may be configured to execute, for example, the shift amount secure left shift.

In S460, the right shift means 460 computes shares [[c₀]]^{P}=[[2^{ρ'}a/2^{R}']]^{P}, [[c₁]]^{P}=[[2^{ρ'}a/(2^{R**'**-u})]]^{P}, ..., [[c_{d-1}]]^{P}=[[2^{ρ'}a/(2^{R'-(d-1)u}]]^{P} from the share [[b]] ^{P} computed in S450, the upper limit R' of the range, the numerical value u, and the numerical value d. For example, the right shift means 460 may be configured so as to execute the batch shift amount disclosure right shift.

In S470, the third flag computation means 470 computes shares [[f₀]]^{P}, [[f₁]]^{P}, .., [[f_{d-1}]]^{P}, [[f_{L}]]^{P} from the share [[f₀]]², [[f₁]]^{P}, ..., [[f_{d-1}]]²,[[f_{L}]]² computed in S420. The third flag computation means 470 may be configured to execute, for example, the mod 2 -> mod P conversion.

In S480, the shift value computation means 480 computes the share [[s]]^{P}=[[c₀]]^{P}[[f₀]]^{P}+([[c₁]]^{P}-[[c₀]]^{P})[[f₁]]^{P}+...+([[_{Cd-1}]]^{P}-[[c_{d-2}]]^{P})[[f_{d-1}]]^{P}+([[b]]^{P}-[[c_{d-1}]]^{P})[[f_{L}]]^{P} from the share [[b]]^{P} computed in S450, [[c₀]]^{P}, [[c₁]]^{P}, ..., [[c_{d-1}]]^{P}, computed in S460, and the share [[f₀]]^{P}, [[f₁]]^{P}, ..., [[f_{d-1}]]^{P}, [[f_{L}]]^{P}, computed in S470 in.

### (Modification)

As described with reference to the "Technical Background", in the shift amount secure shift (Part 3), when the shift amount greater than -R is not required to be taken into consideration, or when the shift amount smaller than -R' is not required to be taken into consideration, a part of the computations can be omitted. Therefore, in the case of any one of these two, the secure shift system 40 can be constructed so as to omit a part of computations.

According to the embodiment of the present invention, the shift computation can be performed at high speed while keeping the numerical value and the shift amount to be shifted secure. In particular, the shift operation can be performed at high speed without limitation on the amount of right shift.

### <Supplementary Note>

Fig. 10 is a diagram showing an example of a functional configuration of a computer that realizes each apparatus described above. Processing performed in each apparatus described above can be implemented by causing a recording unit 2020 to read a program for causing the computer to function as each apparatus described above, and causing a control unit 2010, an input unit 2030, an output unit 2040, and the like to operate.

The apparatus of the present invention includes, for example, as a single hardware entity, an input unit to which a keyboard or the like can be connected, an output unit to which a liquid crystal display or the like can be connected, a communication unit to which a communication device (e.g., a communication cable) capable of communicating with the exterior of the hardware entity can be connected, a CPU (Central Processing Unit; may also include a cache memory, registers, etc.), a RAM or ROM serving as a memory, an external storage device, which is a hard disk, and a bus that connects the input unit, the output unit, the communication unit, the CPU, the RAM, the ROM, and the external storage device such that data can be exchanged there between. As required, the device (the drive) that can read and write the storage medium such as CD-ROM may be included. A general-purpose computer or the like is an example of a physical entity including such hardware resources.

A program that is necessary to realize the above-described functions and data and the like that are necessary for processing of the program are stored in the external storage device of the hardware entity (the program does not necessarily have to be stored in the external storage device, and may be stored in, for example, the ROM, which is a read-only storage device). Data and the like that are obtained in the processing of the program are stored in the RAM, the external storage device or the like as appropriate.

In the hardware entity, each program and the data needed for processing of each program stored in the external storage device (or ROM, etc.) are loaded to the memory as needed, and the CPU interprets, executes, and processes them as appropriate. As a result, the CPU realizes the predetermined functions (above mentioned, each configuration unit represented as ...unit, ...means).

The present invention is not limited to the embodiment described above, and can be modified as appropriate. The processing described in the foregoing embodiments do not necessarily have to be executed chronologically in the described order, and may be executed in parallel or individually as necessary or according to the processing capacity of the apparatus that executes the processing.

As described above, in a case where processing functions of the hardware entity (the apparatus according to the present invention) described in the foregoing embodiments are realized by the computer, the processing contents of the functions that are to be included in the hardware entity are described by the program. The processing functions of the hardware entity described above are realized in the computer as a result of the program being executed by the computer.

The program describing the processing contents can be recorded in an computer readable recording medium. As the computer readable recording medium, for example, a magnetic recording device, an optical disk, a magneto-optical recording medium, a semiconductor memory, and anything can be used. Specifically, for example, a hard disk device, a flexible disk, a magnetic tape, or the like can be used as the magnetic recording device, a DVD (Digital Versatile Disc), a DVD-RAM (Random Access Memory), a CD-ROM (Compact Disc Read Only Memory), CD-R (Recordable)/RW (ReWritable), or the like can be used as the optical disk, an MO (Magneto-Optical disc) or the like can be used as the magneto-optical recording medium, and an EEP-ROM (Electronically Erasable and Programmable-Read Only Memory) or the like can be used as the semiconductor memory.

In addition, the distribution of this program is carried out by, for example, selling, transferring, or lending a portable recording medium such as the DVD or the CD-ROM on which the program is recorded. Further, the program may be distributed by storing the program in a storage device of a server computer and transmitting the program from the server computer to other computers via a network.

The computer executing such a program is configured to, for example, first, temporarily store the program recorded on the portable recording medium or the program transferred from the server computer in its own storage device. When executing the processing, the computer reads the program stored in its own storage device, and executes the processing according to the read program. As another execution form of the program, the computer may directly read the program from the portable recording medium and execute processing according to the program, each time the program is transferred from the server computer to the computer, processing according to the received program may be executed sequentially. In addition, by a so-called ASP (Application Service Provider) type service which does not transfer the program from the server computer to the computer and realizes the processing function only by the execution instruction and the result acquisition, the above-mentioned processing may be executed. Note that the program in this embodiment includes something which is information to be provided for processing by the electronic computer and equivalent to the program (data which is not a direct instruction to the computer but has a property to specify the processing of the computer).

Further, according to this aspect, the computer is caused to execute the predetermined program to constitute the hardware entity, but at least part of the processing contents may be realized using hardware.

The above descriptions of the embodiments of the present invention are presented for the purpose of illustration and description. The descriptions are neither intended to be comprehensive nor to limit the present invention to the strict form disclosed. Modifications and variations can be made from the teachings described above. The embodiments were selected and described to provide the best illustration of the principle of the present invention such that those skilled in the art can use the present invention in various embodiments suitable for thoroughly considered practical use, and by adding various alterations.

## Claims

1. A secure shift system where P is a prime number, p is a number of bits of the prime number P, Q is an order of a factor ring, M is an upper limit value which can be taken by the MSB position of numerical values to be inputted, M' is an upper limit value of the MSB position which is allowable by shares, [R, R'] is a range of the right shift amount which is covered by a divided right shift, and [[x]]^{y} and <<x>>^{y} represent a share in which a mod y element x is performed by (k, n)-secret sharing and (k, n)-replicated secret sharing, respectively, where k is a threshold value of a secret sharing and n is a number of sharing of the secret sharing, the secure shift system which is configured of three or more secure shift apparatuses and computes a share [[s]]^{P} of a numerical value s, where, s= 2^{ρ}a, obtained by shifting a numerical value a by p bits from a share [[a]]^{P} of the numerical value a and a share <<ρ>>^{Q} of the shift amount p, where, in a case of p ≥ 0, ρ represents the left shift, and in a case of p < 0, p represents the right shift, the secure shift system comprising:
a modulus conversion means (410) for computing a share <<ρ>>^{p} from the <<ρ>>^{Q};
a first flag computation means (420) for computing shares [[f₀]]²= [[(ρ ≥ -R')]]², [[f₁]]²= [[(ρ ≥ -R'+u)]]², ..., [[f_{d-1}]]²= [[(ρ ≥ -R'₊(d-1)u]]², and [[f_{L}]]²= [[(ρ ≥ -R+1)]]² from the share <<ρ>>^{Q} or the share <<ρ>>^{p}, the range [R, R'], a numerical value u, and a numerical value d where u is an integer satisfying u ≤ M'-M+1 and d is an integer satisfying d ≥ ceiling(((R'-R+1)/u)_{Re}), where (x/y)_{Re} represents the value of real number division for two numbers x, y;
a second flag computation means (430) for computing shares <<f₁>>^{p}, <<f₂>>^{p}, ..., <<f_{d-1}>>^{p}, <<f_{L}>>^{p} from the shares [[f₁]]², [[f₂]]², ..., [[f_{d-1}]]², [[f_{L}]]²;
a shift amount computation means (440) for computing a share <<ρ'>>^{p}= <<ρ>>^{p}+R' -u (Σ_{1≤i<d}<<fᵢ>>^{p}) + ((d-1)u-R') <<f_{L}>>^{p} from the share <<ρ>>^{p}, the shares <<f₁>>^{p}, <<f₂>>^{p}, ..., <<f_{d-1}>>^{p}, <<f_{L}>>^{p}, the upper limit value R' of the range, the numerical value u, and the numerical value d;
a left shift means (450) for computing a share [[b]]^{P}= [[2^{ρ'}a]]^{P} from the share [[a]]^{P} and the share <<ρ'>>^{p};
a right shift means (460) for computing shares [[c₀]]^{P}= [[2^{ρ'} a/2^{R'}]]^{P}, [[c₁]]^{P}= [[2^{ρ'}a/ (2^{R'-u})]]^{P}, ..., [c_{d-1}]]^{P}= [[2^{ρ'}a/(2^{R'-(d-1)u})]]^{P} from the share [[b]]^{P}, the upper limit value R' of the range, the numerical value u, and the numerical value d;
a third flag computation means (470) for computing shares [[f₀]]^{P}, [[f₁]]^{P}, ..., [[f_{d-1}]]^{P}, [[f_{L}]]^{P} from the shares [[f₀]]², [[f₁]]², ..., [[f_{d-1}]², [[f_{L}]]²; and
a shift value computation means (480) for computing the share [[s]]^{P}= [[c₀]]^{P}[[f₀]]^{P}+([[c₁]]^{P}- [[c₀]]^{P})[ [f₁]]^{P}+ ... + ([[C_{d-1}]]^{P}- [[c_{d}-2]]^{P})[ [f_{d-1}]]^{P}+ ([[b]]^{P}- [[c_{d-1}]]^{P}) [[f_{L}]]^{P} from the share [[b]]^{P}, the shares [[c₀]]^{P}, [[c₁]]^{P}, ..., [[c_{d-1}]]^{P}, and the shares [[f₀]]^{P}, [[f₁]]^{P}, ..., [[f_{d-1}]]^{P}, [[f_{L}]]^{P}.

2. A secure shift apparatus in a secure shift system where P is a prime number, p is a number of bits of the prime number P, Q is an order of a factor ring, M is an upper limit value which can be taken by the MSB position of numerical values to be inputted, M' is an upper limit value of the MSB position which is allowable by shares, [R, R'] is a range of the right shift amount which is covered by a divided right shift, and [[x]]^{y} and <<x>>^{y} represent a share in which a mod y element x is performed by (k, n)-secret sharing and (k, n)-replicated secret sharing, respectively, where k is a threshold value of a secret sharing and n is a number of sharing of the secret sharing, the secure shift system which is configured of three or more secure shift apparatuses and computes a share [[s]]^{P} of a numerical value s, where, s= 2^{ρ}a, obtained by shifting a numerical value a by p bits from a share [[a]]^{P} of the numerical value a and a share <<ρ>>^{Q} of the shift amount p, where, in a case of p ≥ 0, p represents the left shift, and in a case of p < 0, p represents the right shift, the secure shift apparatus comprising:
a modulus conversion unit (410) configured to compute a share <<ρ>>^{P} from the <<ρ>>^{Q};
a first flag computation unit (420) configured to compute shares [[f₀]]²= [[(ρ ≥ -R')]]², [[f₁]]²= [[(ρ ≥ -R'+u)]]², ..., [[f_{d-1}]]²= [[(ρ ≥ -R'+(d-1)u]]², and [[f_{L}]]²= [[(ρ ≥ -R+1)]]² from the share <<ρ>>^{Q} or the share <<ρ>>^{p}, the range [R, R'], a numerical value u, and a numerical value d where u is an integer satisfying u ≤ M'-M+1 and d is an integer satisfying d ≥ ceiling(((R'-R+1)/u)_{Re}), where (x/y)_{Re} represents the value of real number division for two numbers x, y;
a second flag computation unit (430) configured to compute shares <<f₁>>^{p}, <<f₂>>^{p}, ..., <<f_{d-1}>>^{p}, <<f_{L}>>^{p} from the shares [[f₁]², [[f₂]]², ..., [[f_{d-1}]]², [[f_{L}]]²;
a shift amount computation unit (440) configured to compute a share <<ρ>>^{p}= <<ρ>>^{p}+R'-u(Σ_{1≤i<d}<<fᵢ>>^{p})+((d-1)u-R')<<f_{L}>>^{P} from the share <<ρ>>^{p}, the shares <<f₁>>^{p}, <<f₂>>^{p}, ..., <<f_{d-1}>>^{p}, <<f_{L}>>^{p}, the upper limit value R' of the range, the numerical value u, and the numerical value d;
a left shift unit (450) configured to compute a share [[b]]^{P}= [[2^{ρ'}a]]^{P} from the share [[a]]^{P} and the share <<ρ'>>^{p};
a right shift unit (460) configured to compute shares [[c₀]]^{P}= [[2^{ρ'}a/2^{R'}]]^{P}, [[c₁]]^{P}= [[2^{ρ'}a/ (2^{R'-u})]]^{P}, ..., [[c_{d-1}]]^{P}= [[2^{ρ'}a/ (2^{R'-(d-1)u})]]^{P} from the share [[b]]^{P}, the upper limit value R' of the range, the numerical value u, and the numerical value d;
a third flag computation unit (470) configured to compute shares [[f₀]]^{P}, [[f₁]]^{P}, ..., [[f_{d-1}]]^{P}, [[f_{L}]]^{P} from the shares [[f₀]]², [[f₁]]², ..., [[f_{d-1}]]², [[f_{L}]]²; and
a shift value computation unit (480) configured to compute the share [[s]]^{P}= [[c₀]]^{P}[[f₀]]^{P}+([[c₁]]^{P}-[[c₀]]^{P})[[f₁]]^{P}+ ... + ([c_{d-1}]]^{P}-[[c_{d-2}]]^{P})[[f_{d-1}]]^{P}+([[b]]^{P}-[[c_{d-1}]^{P})[[f_{L}]]^{P} from the share [[b]]^{P}, the shares [[c₀]]^{P}, [[c₁]]^{P}, ..., [[c_{d-1}]]^{P}, and the shares [[f₀]]^{P}, [[f₁]]^{P}, ..., [[f_{d-1}]]^{P}, [[f_{L}]]^{P}.

3. A computer-implemented secure shift method where P is a prime number, p is a number of bits of the prime number P, Q is an order of a factor ring, M is an upper limit value which can be taken by the MSB position of numerical values to be inputted, M' is an upper limit value of the MSB position which is allowable by shares, [R, R'] is a range of the right shift amount which is covered by a divided right shift, and [[x]]^{y} and <<x>>^{y} represent a share in which a mod y element x is performed by (k, n)-secret sharing and (k, n)-replicated secret sharing, respectively, where k is a threshold value of a secret sharing and n is a number of sharing of the secret sharing, the secure shift method by which a share [[s]]^{P} of a numerical value s, where, s= 2^{ρ}a, obtained by shifting a numerical value a by p bits is computed from a share [[a]]^{P} of the numerical value a and a share <<ρ>>^{Q} of the shift amount p, where, in a case of p ≥ 0, p represents the left shift, and in a case of p < 0, p represents the right shift, by using a secure shift system configured of three or more secure shift apparatuses, the secure shift method comprising:
a modulus conversion step (S410) in which the secure shift system computes a share <<ρ>>^{P} from the <<ρ>>^{Q};
a first flag computation step (S420) in which the secure shift system computes shares [[f₀]]²= [[(ρ ≥ -R')]]², [[f₁]]²= [[(ρ ≥ -R'+u)]², ..., [[f_{d-1}]]²= [[(ρ ≥ -R'+(d-1)u]]², and [[f_{L}]]²= [[(ρ ≥ -R+1)]]² from the share <<ρ>>^{Q} or the share <<ρ>>^{p}, the range [R, R'], a numerical value u, and a numerical value d where u is an integer satisfying u ≤ M'-M+1 and d is an integer satisfying d ≥ ceiling(((R'-R+1)/u)_{Re}), where (x/y)_{Re} represents the value of real number division for two numbers x, y;
a second flag computation step (S430) in which the secure shift system computes shares <<f₁>>^{p}, <<f₂>>^{p}, ..., <<f_{d-1}>>^{p}, <<f_{L}>>^{P} from the shares [[f₁]]², [[f₂]]², ..., [[f_{d-1}]]², [[f_{L}]]²;
a shift amount computation step (S440) in which the secure shift system computes share <<ρ>>^{p}= <<ρ>>^{p}+R'-
u (Σ_{1≤i<d}<<fᵢ>>^{p}) + ((d-1)u-R' )<<f_{L}>>^{P} from the share <<ρ>>^{p}, the shares <<f₁>>^{p}, <<f₂>>^{p}, ..., <<f_{d-1}>>^{p}, <<f_{L}>>^{p}, the upper limit value R' of the range, the numerical value u, and the numerical value d;
a left shift step (S450) in which the secure shift system computes a share [[b]]^{P}= [[2^{ρ'}a]]^{P} from the share [[a]]^{P} and the share <<ρ'>>^{p};
a right shift step (S460) in which the secure shift system computes shares [[c₀]]^{P}= [[2^{ρ'}a/2^{R'}]]^{P}, [[c₁]]^{P}= [[2^{ρ'}a/(₂R'-u)]]^{P}, ..., [[c_{d-1}]]^{P}= [[2^{ρ'}a/(2^{R'-(d-1)u})]] ^{P} from the share [[b]]^{P}, the upper limit value R' of the range, the numerical value u, and the numerical value d;
a third flag computation step (S470) in which the secure shift system computes shares [[f₀]]^{P}, [[f₁]]^{P}, ..., [[f_{d-1}]]^{P}, [[f_{L}]]^{P} from the shares [[f₀]]², [[f_{d}]]², ..., [[f_{d-1}]]², [[f_{L}]]²; and a shift value computation step (S480) in which the secure shift system computes the share [[s]]^{P}= [[c₀]]^{P}[[f₀]]^{P}+([[c₁]]^{P}-[[c₀]]^{P})[[f₁]^{P}+ ... +([[C_{d-1}]]^{P}-[[C_{d-2}]]^{P})[[f_{d-1}]]^{P}+([[b]]^{P}-[[C_{d-1}]]^{P})[[f_{L}]]^{P} from the share [[b]]^{P}, the shares [[c₀]]^{P}, [[c₁]]^{P}, ..., [[c_{d-1}]]^{P}, and the shares [[f₀]]^{P}, [[f₁]]^{P}, ..., [[f_{d-1}]]^{P}, [[f_{L}]]^{P}.

4. A secure shift system where P is a prime number, p is a number of bits of the prime number P, Q is an order of a factor ring, M is an upper limit value that can be taken by the MSB position of numerical values to be inputted, and [[x]]^{y} and <<x>>^{y} represent a share in which a mod y element x is performed by (k, n)-secret sharing and (k, n)-replicated secret sharing, respectively, where k is a threshold value of a secret sharing and n is a number of sharing of the secret sharing, the secure shift system which is configured of three or more secure shift apparatuses and computes a share [[s]]^{P} of a numerical value s, where, s= 2^{ρ}a, obtained by shifting a numerical value a by p bits from a share [[a]]^{P} of the numerical value a and a share <<ρ>>^{Q} of the shift amount p, where, in a case of ρ ≥ 0, p represents the left shift, and in a case of p < 0, p represents the right shift, the secure shift system comprising:
a modulus conversion means (210) for computing a share <<ρ>>^{p} from the share <<ρ>>^{Q};
a first flag computation means (220) for computing a share [[f_{L}]]²= [[(ρ ≥ 0)]]² from the share <<ρ>>^{Q} or the share <<ρ>>^{p};
a second flag computation means (230) for computing a share <<f_{L}>>^{P} from the share [[f_{L}]]²;
a shift amount computation means (240) for computing a share <<ρ'>>^{p}= <<ρ>>^{p}+M-M<<f_{L}>>^{p} from the share <<ρ>>^{Q}, the share <<f_{L}>>^{p}, and the upper limit value M;
a left shift computation means (250) for computing a share [[b]]^{P}= [[2^{ρ'}a]]^{P} from the share [[a]]^{P} and the share <<ρ'>>^{p};
a right shift means (260) for computing a share [[c]]^{P}= [[2^{ρ'}a/2^{M}]]^{P} from the share [[b]]^{P} and the upper limit value M; a third flag computation means (270) for computing a share [[f_{L}]]^{P} from the share [[f_{L}]]²; and
a shift value computation means (280) for computing the share [[s]]^{P}= [[c]]^{P}+([[b]]^{P}-[[c]]^{P})[[f_{L}]]^{P} from the share [[b]]^{P}, the share [[c]]^{P}, and the share [[f_{L}]]^{P}.

5. A program for causing a computer to function as the secure shift apparatus according to claim 2.

## Patentansprüche

1. Sicheres Verschiebungssystem, wobei P eine Primzahl ist, p eine Anzahl von Bits der Primzahl P ist, Q eine Ordnung eines Faktorrings ist, M ein oberer Grenzwert ist, der durch die MSB-Position von einzugebenden numerischen Werten angenommen werden kann, M' ein oberer Grenzwert der MSB-Position ist, der durch Anteile zulässig ist, [R, R'] ein Bereich des Rechtsverschiebungsbetrags ist, der durch eine unterteilte Rechtsverschiebung abgedeckt ist, und [[x]]^{y} und <<x>>^{y} einen Anteil darstellen, in dem ein mod-y-Element x durch (k, n)-Geheimnisteilung bzw. (k, n)-replizierte Geheimnisteilung durchgeführt wird, wobei k ein Schwellenwert einer Geheimnisteilung ist und n eine Anzahl von Anteilen der Geheimnisteilung ist, wobei das sichere Verschiebungssystem aus drei oder mehr sicheren Verschiebungsvorrichtungen konfiguriert ist und einen Anteil [[s]]^{P} eines numerischen Werts s berechnet, wobei s = 2^{ρ}a, der durch Verschieben eines numerischen Werts a um p Bits von einem Anteil [[a]]^{P} des numerischen Werts a und einem Anteil <<ρ>>^{Q} des Verschiebungsbetrags p erhalten wird, wobei p in einem Fall von p ≥ 0 die Linksverschiebung darstellt und p in einem Fall von p < 0 die Rechtsverschiebung darstellt, wobei das sichere Verschiebungssystem Folgendes aufweist:
eine Modulumwandlungseinrichtung (410) zum Berechnen eines Anteils <<ρ>>^{P} aus dem <<ρ>>^{Q};
eine erste Flag-Berechnungseinrichtung (420) zum Berechnen von Anteilen [[f₀]]² = [[(p ≥ -R')]]², [[f₁]]² = [[(ρ ≥ -R'+u)]]², ..., [[f_{d-1}]]² = [[(ρ ≥ -R'+(d-1)u]]² und [[f_{L}]]² = [[(ρ ≥ -R+1)]]² aus dem Anteil <<ρ>>^{Q} oder dem Anteil <<ρ>>^{p}, dem Bereich [R, R'], einem numerischen Wert u und einem numerischen Wert d, wobei u eine ganze Zahl ist, die u ≤ M'-M+1 erfüllt, und d eine ganze Zahl ist, die d ≥ ceiling(((R'-R+1)/u)_{Re}) erfüllt, wobei (x/y)_{Re} den Wert einer reellen Zahlendivision für zwei Zahlen x, y darstellt;
eine zweite Flag-Berechnungseinrichtung (430) zum Berechnen von Anteilen <<f₁>>^{p}, <<f₂>>^{p}, ..., <<f_{d-1}>>^{p}, <<f_{L}>>^{p} aus den Anteilen [[f₁]]², [[f₂]]², ..., [[f_{d-1}]]², [[f_{L}]]²;
eine Verschiebungsbetragsberechnungseinrichtung (440) zum Berechnen eines Anteils <<ρ'>>^{p} = <<ρ>>^{p}+R'-u(Σ_{1≤i<d}<<fᵢ>>^{p})+((d-1)u-R')<<f_{L}>>^{p} aus dem Anteil <<ρ>>^{p}, den Anteilen <<f₁>>^{p}, <<f₂>>^{p}, ..., <<f_{d-1}>>^{p}, <<f_{L}>>^{p}, dem oberen Grenzwert R' des Bereichs, dem numerischen Wert u und dem numerischen Wert d;
eine Linksverschiebungseinrichtung (450) zum Berechnen eines Anteils [[b]]^{P} = [[2^{ρ'}a]]^{P} aus dem Anteil [[a]]^{P} und dem Anteil <<ρ'>>^{p};
eine Rechtsverschiebungseinrichtung (460) zum Berechnen von Anteilen [[c₀]]^{P} = [[2^{ρ}'a/2^{R'}]]^{P}, [[c₁]]^{P} = [[2^{ρ'}a/(2^{R'-u})]]^{P}, ..., [[_{Cd-1}]]^{P} = [[2^{ρ'}a/ (2^{R'- (d-1)u)}]]^{P} aus dem Anteil [[b]]^{P}, dem oberen Grenzwert R' des Bereichs, dem numerischen Wert u und dem numerischen Wert d;
eine dritte Flag-Berechnungseinrichtung (470) zum Berechnen von Anteilen [[f₀]]^{P}, [[f₁]^{P}, ..., [[f_{d-1}]]^{P}, [[f_{L}]]^{P} aus den Anteilen [[f₀]², [[f₁]]², ..., [[f_{d-1}]]², [[f_{L}]]²; und
eine Verschiebungswertberechnungseinrichtung (480) zum Berechnen des Anteils [[s]]^{P} = [[_{c0}]^{P}[[f₀]]^{P}+([[c₁]]^{P}-[[c₀]^{P})[[f₁]^{P}+ ... + ([ [C_{d-1}]]^{P}-[[c_{d-2}]]^{P})[f_{d-1}]]^{P}+([[b]]-[[c_{d-1}]]^{P})[[f_{L}]]^{P} aus dem Anteil [[b]] ^{P}, den Anteilen [[c₀]]^{P},[[c1]]^{P}, ..., [[c_{d-1}]]^{P} und den Anteilen [[f₀]]^{P}, [[f₁]]^{P}, ..., [[f_{d-1}]]^{P}, [[f_{L}]]^{P}.

2. Sichere Verschiebungsvorrichtung in einem sicheren Verschiebungssystem, wobei P eine Primzahl ist, p eine Anzahl von Bits der Primzahl P ist, Q eine Ordnung eines Faktorrings ist, M ein oberer Grenzwert ist, der durch die MSB-Position von einzugebenden numerischen Werten angenommen werden kann, M' ein oberer Grenzwert der MSB-Position ist, der durch Anteile zulässig ist, [R, R'] ein Bereich des Rechtsverschiebungsbetrags ist, der durch eine unterteilte Rechtsverschiebung abgedeckt ist, und [[x]]^{y} und <<x>>^{y} einen Anteil darstellen, in dem ein mod-y-Element x durch (k, n)-Geheimnisteilung bzw. (k, n)-replizierte Geheimnisteilung durchgeführt wird, wobei k ein Schwellenwert einer Geheimnisteilung ist und n eine Anzahl von Anteilen der Geheimnisteilung ist, wobei das sichere Verschiebungssystem aus drei oder mehr sicheren Verschiebungsvorrichtungen konfiguriert ist und einen Anteil [[s]]^{P} eines numerischen Werts s berechnet, wobei s = 2^{ρ}a, der durch Verschieben eines numerischen Werts a um p Bits von einem Anteil [[a]]^{P} des numerischen Werts a und einem Anteil <<ρ>>^{Q} des Verschiebungsbetrags p erhalten wird, wobei p in einem Fall von ρ ≥ 0 die Linksverschiebung darstellt und p in einem Fall von p < 0 die Rechtsverschiebung darstellt, wobei die sichere Verschiebungsvorrichtung Folgendes aufweist:
eine Modulumwandlungseinheit (410), die dazu konfiguriert ist, einen Anteil <<ρ>>^{P} aus dem <<ρ>>^{Q} zu berechnen;
eine erste Flag-Berechnungseinheit (420), die dazu konfiguriert ist, Anteile [[f₀]]² = [[(ρ ≥ -R')]]², [[f₁]]² = [[(ρ ≥ - R'+u)]]², ..., [[f_{d-1}]]² = [[(ρ ≥ -R'+(d-1)u]]² und [[f_{L}]]² = [[(ρ ≥-R+1)]]² aus dem Anteil <<ρ>>^{Q} oder dem Anteil <<ρ>>^{p}, dem Bereich [R, R'], einem numerischen Wert u und einem numerischen Wert d zu berechnen, wobei u eine ganze Zahl ist, die u ≤ M'-M+1 erfüllt, und d eine ganze Zahl ist, die d ≥ ceiling(((R'-R+1)/u)_{Re}) erfüllt, wobei (x/y)_{Re} den Wert einer reellen Zahlendivision für zwei Zahlen x, y darstellt;
eine zweite Flag-Berechnungseinheit (430), die dazu konfiguriert ist, Anteile <<f₁>>^{p}, <<f₂>>^{p}, ..., <<f_{d-1}>>^{p}, <<f_{L}>>^{p} aus den Anteilen [[f₁]]², [[f₂]]², ..., [[f_{d-1}]]², [[f_{L}]]² zu berechnen;
eine Verschiebungsbetragsberechnungseinheit (440), die dazu konfiguriert ist, einen Anteil <<ρ'>>^{p} = <<ρ>>^{p}+R'-u(Σ_{1≤i<d}<<fᵢ>>^{p}) + ((d-1)u-R' )<<f_{L}>>^{p} aus dem Anteil <<ρ>>^{p}, den Anteilen <<f₁>>^{p}, <<f₂>>^{p}, ..., <<f_{d-1}>>^{p}, <<f_{L}>>^{p}, dem oberen Grenzwert R' des Bereichs, dem numerischen Wert u und dem numerischen Wert d zu berechnen;
eine Linksverschiebungseinheit (450), die dazu konfiguriert ist, einen Anteil [[b]]^{P} = [[2^{ρ'}a]]^{P} aus dem Anteil [[a]]^{P} und dem Anteil <<ρ'>>^{p} zu berechnen;
eine Rechtsverschiebungseinheit (460), die dazu konfiguriert ist, Anteile [[c₀]]^{P} = [[2^{ρ'}a/2^{R'}]]^{P}, [[c₁]]^{P} = [[2^{ρ'}a/ (2^{R'-u})]]^{P}, ..., [[c_{d-1}]]^{P} = [[2^{ρ'}a/ (2^{R'- (d-1)u})]]^{P} aus dem Anteil [[b]]^{P}, dem oberen Grenzwert R' des Bereichs, dem numerischen Wert u und dem numerischen Wert d zu berechnen;
eine dritte Flag-Berechnungseinheit (470), die dazu konfiguriert ist, Anteile [[f₀]]^{P}, [[f₁]]^{P}, ..., [[f_{d-1}]]^{P}, [[f_{L}]]^{P} aus den Anteilen [[f₀]]², [[f₁]]², ..., [[f_{d-1}]², [[f_{L}]]² zu berechnen; und
eine Verschiebungswertberechnungseinheit (480), die dazu konfiguriert ist, den Anteil [[s]]^{P} = [[c₀]]^{P}[[f₀]]^{P}+([[c_{d}]]^{P}-[[c₀]]^{P})[[f₁]]^{P}+ ... + ([[C_{d-1}]]^{P}-[ [C_{d-2}]]^{P})[[f_{d-1}]^{P}+([[b]]^{P}-[[C_{d-1}]]^{P})[[f_{L}]]^{P} aus dem Anteil [[b]]^{P}, den Anteilen [[c₀]^{P}, [[c₁]]^{P}, ..., [[_{cd-1}]]^{P} und den Anteilen [[f₀]]^{P}, [[f₁]], ..., [[f_{d-1}]]^{P}, [[f_{L}]]^{P} zu berechnen.

3. Computerimplementiertes sicheres Verschiebungsverfahren, wobei P eine Primzahl ist, p eine Anzahl von Bits der Primzahl P ist, Q eine Ordnung eines Faktorrings ist, M ein oberer Grenzwert ist, der durch die MSB-Position von einzugebenden numerischen Werten angenommen werden kann, M' ein oberer Grenzwert der MSB-Position ist, der durch Anteile zulässig ist, [R, R'] ein Bereich des Rechtsverschiebungsbetrags ist, der durch eine unterteilte Rechtsverschiebung abgedeckt ist, und [[x]]^{y} und <<x>>^{y} einen Anteil darstellen, in dem ein mod-y-Element x durch (k, n)-Geheimnisteilung bzw. (k, n)-replizierte Geheimnisteilung durchgeführt wird, wobei k ein Schwellenwert einer Geheimnisteilung ist und n eine Anzahl von Teilung der Geheimnisteilung ist, wobei das sichere Verschiebungsverfahren, durch das ein Anteil [[s]]^{P} eines numerischen Werts s berechnet wird, wobei s = 2^{ρ}a, der durch Verschieben eines numerischen Werts a um p Bits aus einem Anteil [[a]]^{P} des numerischen Werts a und einem Anteil <<ρ>>^{Q} des Verschiebungsbetrags p erhalten wird, wobei p in einem Fall von p ≥ 0 die Linksverschiebung darstellt und p in einem Fall von p < 0 die Rechtsverschiebung darstellt, unter Verwendung eines sicheren Verschiebungssystems, das aus drei oder mehr sicheren Verschiebungsvorrichtungen konfiguriert ist, wobei das sichere Verschiebungsverfahren Folgendes aufweist:
einen Modulumwandlungsschritt (S410), in dem das sichere Verschiebungssystem einen Anteil <<ρ>>^{p} aus dem <<ρ>>^{Q} berechnet;
einen ersten Flag-Berechnungsschritt (S420), in dem das sichere Verschiebungssystem Anteile [[f₀]]² = [[(ρ ≥ -R')]², [[f₁]]² = [[(ρ ≥ -R'+u)]]², ..., [[f_{d-1}]]² = [[(ρ ≥ -R'+(d-1)u]]² und [[f_{L}]² = [[(ρ ≥ -R+1)]]² aus dem Anteil <<ρ>>^{Q} oder dem Anteil <<ρ>>^{p}, dem Bereich [R, R'], einem numerischen Wert u und einem numerischen Wert d berechnet, wobei u eine ganze Zahl ist, die u ≤ M'-M+1 erfüllt, und d eine ganze Zahl ist, die d ≥ ceiling(((R'-R+1)/u)_{Re}) erfüllt, wobei (x/y)_{Re} den Wert einer reellen Zahlendivision für zwei Zahlen x, y darstellt;
einen zweiten Flag-Berechnungsschritt (S430), in dem das sichere Verschiebungssystem Anteile <<f₁>>^{p}, <<f₂>>^{p}, ..., <<f_{d-1}>>^{p}, <<f_{L}>>^{p} aus den Anteilen [[f₁]]², [[f₂]]², ..., [[f_{d-1}]]², [[f_{L}]]2 berechnet;
einen Verschiebungsbetragsberechnungsschritt (S440), in dem das sichere Verschiebungssystem Anteil <<ρ'>>^{p} = <<p>>^{p}+R'-u (Σ_{1≤i<d}<<fᵢ>>^{p}) + ((d-1)u-R')<<f_{L}>>^{p} aus dem Anteil <<ρ>>^{p}, den Anteilen <<f₁>>^{p}, <<f₂>>^{p}, ..., <<f_{d-1}>>^{p}, <<f_{L}>>^{p}, dem oberen Grenzwert R' des Bereichs, dem numerischen Wert u und dem numerischen Wert d berechnet;
einen Linksverschiebungsschritt (S450), in dem das sichere Verschiebungssystem einen Anteil [[b]]^{P} = [[2^{ρ'}a]]^{P} aus dem Anteil [[a]]^{P} und dem Anteil <<ρ'>>^{p} berechnet;
einen Rechtsverschiebungsschritt (S460), in dem das sichere Verschiebungssystem Anteile [[c₀]]^{P} = [[2^{ρ}'a/2^{R'}]]^{P}, [[c₁]]^{P} = [[2^{ρ'}a/(2^{R'-u})]]^{P}, ..., [[C_{d-1}]]^{P} = [[2^{ρ'}a/ (2^{R'-(d-1)u)}]]^{P} aus dem Anteil [[b]]^{P}, dem oberen Grenzwert R' des Bereichs, dem numerischen Wert u und dem numerischen Wert d berechnet;
einen dritten Flag-Berechnungsschritt (S470), in dem das sichere Verschiebungssystem Anteile [[f₀]]^{P}, [[f₁]]^{P}, ..., [[f_{d-1}]]^{P}, [[f_{L}]]^{P} aus den Anteilen [[f₀]]2, [[f₁]]², ..., [[f_{d-1}]]², [[f_{L}]]² berechnet; und
einen Verschiebungswertberechnungsschritt (S480), in dem das sichere Verschiebungssystem den Anteil [[s]]^{P} = [[c₀]]^{P}[[f₀]]^{P}+([[c₁]^{P}-[[c₀]]^{P})[[f₁]]^{P}+ ... + ([[C_{d-1}]]^{P}-[[C_{d-2}]]^{P})[[f_{d-i}]]^{P}+([[b]]^{P}-[[C_{d-1}]]^{P})[[f_{L}]^{P} aus dem Anteil [[b]]^{P}, den Anteilen [[c₀]^{P}, [[c₁]]^{P}, ..., [[c_{d-1}]]^{P} und den Anteilen [[f₀]]^{P}, [f₁]]^{P}, ..., [[f_{d-1}]^{P}, [[f_{L}]]^{P} berechnet.

4. Sicheres Verschiebungssystem, wobei P eine Primzahl ist, p eine Anzahl von Bits der Primzahl P ist, Q eine Ordnung eines Faktorrings ist, M ein oberer Grenzwert ist, der durch die MSB-Position von einzugebenden numerischen Werten angenommen werden kann, und [[x]]^{y} und <<x>>^{y} einen Anteil darstellen, in dem ein mod-y-Element x durch (k, n)-Geheimnisteilung bzw. (k, n)-replizierte Geheimnisteilung durchgeführt wird, wobei k ein Schwellenwert einer Geheimnisteilung ist und n eine Anzahl von Anteilen der Geheimnisteilung ist, wobei das sichere Verschiebungssystem aus drei oder mehr sicheren Verschiebungsvorrichtungen konfiguriert ist und einen Anteil [[s]]^{P} eines numerischen Werts s berechnet, wobei s = 2^{ρ}a, der durch Verschieben eines numerischen Werts a um p Bits von einem Anteil [[a]]^{P} des numerischen Werts a und einem Anteil <<ρ>>^{Q} des Verschiebungsbetrags p erhalten wird, wobei p in einem Fall von p ≥ 0 die Linksverschiebung darstellt und p in einem Fall von p < 0 die Rechtsverschiebung darstellt, wobei das sichere Verschiebungssystem Folgendes aufweist:
eine Modulumwandlungseinrichtung (210) zum Berechnen eines Anteils <<ρ>>^{P} aus dem Anteil <<ρ>>^{Q};
eine erste Flag-Berechnungseinrichtung (220) zum Berechnen eines Anteils [[f_{L}]]2 = [[(ρ ≥ 0)]]² aus dem Anteil <<ρ>>^{Q} oder dem Anteil <<ρ>>^{p};
eine zweite Flag-Berechnungseinrichtung (230) zum Berechnen eines Anteils <<f_{L}>>^{p} aus dem Anteil [[f_{L}]]²;
eine Verschiebungsbetragsberechnungseinrichtung (240) zum Berechnen eines Anteils <<ρ'>>^{p} = <<ρ>>^{p}+M-M<<f_{L}>>^{p} aus dem Anteil <<ρ>>^{Q}, dem Anteil <<f_{L}>>^{p} und dem oberen Grenzwert M;
eine Linksverschiebungsberechnungseinrichtung (250) zum Berechnen eines Anteils [[b]]^{P} = [[2^{ρ}'a]]^{P} aus dem Anteil [[a]]^{P} und dem Anteil <<ρ'>>^{p};
eine Rechtsverschiebungseinrichtung (260) zum Berechnen eines Anteils [[c]]^{P} = [[2^{ρ'}a/2^{M}]]^{P} aus dem Anteil [[b]]^{P} und dem oberen Grenzwert M;
eine dritte Flag-Berechnungseinrichtung (270) zum Berechnen eines Anteils [[f_{L}]]^{P} aus dem Anteil [[f_{L}]]²; und
eine Verschiebungsbetragsberechnungseinrichtung (280) zum Berechnen des Anteils [[s]]^{P} = [[c]]^{P}+([[b]]^{P}-[[c]]^{P})[[f_{L}]]^{P} aus dem Anteil [[b]]^{P}, dem Anteil [[c]]^{P} und dem Anteil [[f_{L}]]^{P}.

5. Programm zum Bewirken, dass ein Computer als die sichere Verschiebungsvorrichtung nach Anspruch 2 funktioniert.

## Revendications

1. Système de décalage sécurisé où P est un nombre premier, p est un nombre de bits du nombre premier P, Q est un ordre d'un anneau de facteur, M est une valeur limite supérieure qui peut être prise par la position MSB de valeurs numériques à entrer, M' est une valeur limite supérieure de la position MSB qui est autorisée par des parts, [R, R'] est une plage de la quantité de décalage à droite qui est couverte par un décalage à droite divisé, et [[x]]^{y} et <<x>>^{y} représentent une part dans laquelle un élément mod y x est effectué par un partage de secret (k, n) et un partage de secret (k, n) répliqué, respectivement, où k est une valeur de seuil d'un partage de secret et n est un nombre de partage du partage de secret, le système de décalage sécurisé qui est configuré de trois appareils de décalage sécurisé ou plus et calcule une part [[s]]^{P} d'une valeur numérique s, où, s = 2^{ρ}a, obtenue en décalant une valeur numérique a de p bits à partir d'une part [[a]]^{P} de la valeur numérique a et d'une part <<ρ>>^{Q} de la quantité de décalage p, où, dans un cas de p ≥ 0, p représente le décalage à gauche, et dans un cas de p < 0, p représente le décalage à droite, le système de décalage sécurisé comprenant :
un moyen de conversion de module (410) pour calculer une part <<ρ>>^{p} à partir de la <<ρ>>^{Q} ;
un premier moyen de calcul de drapeau (420) pour calculer des parts [[f₀]]² = [[(ρ ≥ -R')]]², [[f₁]]² = [[(ρ ≥ -R'+u)]]², ..., [[f_{d-1}]]² = [[(ρ ≥ -R'+(d-1)u]]², et [[f_{L}]]² = [[(ρ ≥ -R₊₁)]]² à partir de la part <<ρ>>^{Q} ou de la part <<ρ>>^{p}, de la plage [R, R'], d'une valeur numérique u, et d'une valeur numérique d où u est un entier satisfaisant u ≤ M'-M+1 et d est un entier satisfaisant d ≥ plafond(((R'-R+1)/u)_{Re}), où (x/y)_{Re} représente la valeur de division de nombre réel pour deux nombres x, y ;
un deuxième moyen de calcul de drapeau (430) pour calculer des parts <<f₁>>^{p}, <<f₂>>^{p}, ..., <<f_{d-1}>>^{p}, <<f_{L}>>^{p} à partir des parts [[f₁]]², [[f₂]]², ..., [[f_{d-1}]]², [[f_{L}]]² ;
un moyen de calcul de quantité de décalage (440) pour calculer une part <<ρ'>>^{p} = <<ρ>>^{p}+R'-u(Σ_{1≤i<d}<<fᵢ>>^{p})+((d-1)u-R')<<f_{L}>>^{p} à partir de la part <<ρ>>^{p}, des parts <<f₁>>^{p}, <<f₂>>^{p}, ..., <<f_{d-1}>>^{p}, <<f_{L}>>^{p}, de la valeur limite supérieure R' de la plage, de la valeur numérique u, et de la valeur numérique d ;
un moyen de décalage à gauche (450) pour calculer une part [[b]]^{P} = [[2^{ρ'}a]]^{P} à partir de la part [[a]]^{P} et de la part <<ρ'>>^{p} ;
un moyen de décalage à droite (460) pour calculer des parts [[c₀]]^{P} = [[2^{ρ'}a/2^{R'}]]^{P}, [[c₁]]^{P} = [[2^{ρ'}a/(2^{R'-u})]]^{P}, ..., [c_{d-1}]]^{P} = [[2^{ρ'}a/(2^{R'-(d-1)u})]]^{P} à partir de la part [[b]]^{P}, de la valeur limite supérieure R' de la plage, de la valeur numérique u, et de la valeur numérique d ;
un troisième moyen de calcul de drapeau (470) pour calculer des parts [[f₀]]^{P}, ..., [[f_{d-1}]]^{P}, [[f_{L}]]^{P} à partir des parts [[f₀]]², [[f₁]]², ..., [[f_{d-1}]]², [[f_{L}]]² ; et
un moyen de calcul de valeur de décalage (480) pour calculer la part [[s]]^{P} = [[c₀]]^{P}[[f₀]]^{P}+([[c₁]]^{P}-[[c₀]]^{P}) [[f₁]]^{P}+ ... +([[c_{d-1}]]^{P}-[[c_{d-2}]]^{P})[[f_{d-1}]]^{P}+([[b]]^{P}-[[c_{d-1}]]^{P})[[f_{L}]]^{P} à partir de la part [[b]]^{P}, des parts [[c₀]]^{P} [[c₁]]^{P}, ..., [[c_{d-1}]]^{P}, et des parts [[f₀]]^{P}, [[f₁]]^{P}, ..., [[f_{d-1}]]^{P}, [[f_{L}]]^{P}.

2. Appareil de décalage sécurisé dans un système de décalage sécurisé où P est un nombre premier, p est un nombre de bits du nombre premier P, Q est un ordre d'un anneau de facteur, M est une valeur limite supérieure qui peut être prise par la position MSB de valeurs numériques à entrer, M' est une valeur limite supérieure de la position MSB qui est autorisée par des parts, [R, R'] est une plage de la quantité de décalage à droite qui est couverte par un décalage à droite divisé, et [[x]]^{y} et <<x>>^{y} représentent une part dans laquelle un élément mod y x est effectué par un partage de secret (k, n) et un partage de secret (k, n) répliqué, respectivement, où k est une valeur de seuil d'un partage de secret et n est un nombre de partage du partage de secret, le système de décalage sécurisé qui est configuré de trois appareils de décalage sécurisé ou plus et calcule une part [[s]]^{P} d'une valeur numérique s, où, s = 2^{ρ}a, obtenue en décalant une valeur numérique a de p bits à partir d'une part [[a]]^{P} de la valeur numérique a et d'une part <<ρ>>^{Q} de la quantité de décalage p, où, dans un cas de p ≥ 0, p représente le décalage à gauche, et dans un cas de p < 0, p représente le décalage à droite, l'appareil de décalage sécurisé comprenant :
une unité de conversion de module (410) configurée pour calculer une part <<ρ>>^{p} à partir de la <<ρ>>^{Q} ;
une première unité de calcul de drapeau (420) configurée pour calculer des parts [[f₀]]² = [[(ρ ≥ -R')]]², [[f₁]]² = [[(ρ ≥ - R'+u)]]², ..., [[f_{d-1}]]² = [[(p ≥ -R'+(d-1)u]]², et [[f_{L}]]² = [[(p ≥ - R+1)]]² à partir de la part <<ρ>>^{Q} ou de la part <<ρ>>^{p}, de la plage [R, R'], d'une valeur numérique u, et d'une valeur numérique d où u est un entier satisfaisant u ≤ M'-M+1 et d est un entier satisfaisant d ≥ plafond(((R'-R+1)/u)_{Re}), où (x/y)_{Re} représente la valeur de division de nombre réel pour deux nombres x, y ;
une deuxième unité de calcul de drapeau (430) configurée pour calculer des parts <<f₁>>^{p}, <<f₂>>^{p}, ..., <<f_{d-1}>>^{p}, <<f_{L}>>^{p} à partir des parts [[f₁]]², [[f₂]]², ..., [[f_{d-1}]]², [[f_{L}]]² ;
une unité de calcul de quantité de décalage (440) configurée pour calculer une part <<ρ'>>^{p} = <<ρ>>^{p}+R' -u(Σ_{1≤i<d}<<fᵢ>>^{p})+((d-1)u-R')<<f_{L}>>^{p} à partir de la part <<ρ>>^{p}, des parts <<f₁>>^{p}, <<f₂>>^{p}, ..., <<f_{d-1}>>^{p}, <<f_{L}>>^{p}, de la valeur limite supérieure R' de la plage, de la valeur numérique u, et de la valeur numérique d ;
une unité de décalage à gauche (450) configurée pour calculer une part [[b]]^{P} = [[2^{ρ'}a]]^{P} à partir de la part [[a]]^{P} et de la part <<ρ'>>^{p} ;
une unité de décalage à droite (460) configurée pour calculer des parts [[c₀]]^{P} = [[2^{ρ'}a/2^{R'}]]^{P}, [[c₁]]^{P} = [[2^{ρ'}a/(2^{R'-u})]]^{P}, ..., [[c_{d-1}]]^{P} = [[2^{ρ'}a/(2^{R'-(d-1)u)}] ]^{P} à partir de la part [[b]]^{P}, de la valeur limite supérieure R' de la plage, de la valeur numérique u, et de la valeur numérique d ;
une troisième unité de calcul de drapeau (470) configurée pour calculer des parts [[f₀]]^{P}, [[f₁]]^{P}, ..., [[f_{d-1}]]^{P}, [[f_{L}]]^{P} à partir des parts [[f₀]]², [[f₁]]², ..., [[f_{d-1}]]², [[f_{L}]]² ; et
une unité de calcul de valeur de décalage (480) configurée pour calculer la part [[s]]^{P} = [[c₀]]^{P}[[f₀]]^{P}+([[c₁]]^{P}-[[c₀]]^{P})[[f₁]]^{P}+ ... + ([[c_{d-1}]]^{P}-[[c_{d-2}]]^{P})[[f_{d-1}]]^{P}+([[b]]^{P}-[[c_{d-1}]]^{P})[[f_{L}]]^{P} à partir de la part [[b]]^{P}, des parts [[c₀]]^{P}, [[c₁]]^{P}, ..., [c_{d-1}], et des parts [[f₀]]^{P}, [[f₁]]^{P}, ..., [[f_{d-1}]]^{P}, [[f_{L}]]^{P}.

3. Procédé de décalage sécurisé mis en œuvre par ordinateur où P est un nombre premier, p est un nombre de bits du nombre premier P, Q est un ordre d'un anneau de facteur, M est une valeur limite supérieure qui peut être prise par la position MSB de valeurs numériques à entrer, M' est une valeur limite supérieure de la position MSB qui est autorisée par des parts, [R, R'] est une plage de la quantité de décalage à droite qui est couverte par un décalage à droite divisé, et [[x]]^{y} et <<x>>^{y} représentent une part dans laquelle un élément mod y x est effectué par un partage de secret (k, n) et un partage de secret (k, n) répliqué, respectivement, où k est une valeur de seuil d'un partage de secret et n est un nombre de partage du partage de secret, le procédé de décalage sécurisé par lequel une part [[s]]^{P} d'une valeur numérique s, où, s = 2^{ρ}a, obtenue en décalant une valeur numérique a de p bits est calculée à partir d'une part [[a]]^{P} de la valeur numérique a et d'une part <<ρ>>^{Q} de la quantité de décalage p, où, dans un cas de p ≥ 0, p représente le décalage à gauche, et dans un cas de p < 0, p représente le décalage à droite, en utilisant un système de décalage sécurisé configuré de trois appareils de décalage sécurisé ou plus, le procédé de décalage sécurisé comprenant :
une étape de conversion de module (S410) dans laquelle le système de décalage sécurisé calcule une part <<ρ>>^{p} à partir de la <<ρ>>^{Q} ;
une première étape de calcul de drapeau (S420) dans laquelle le système de décalage sécurisé calcule des parts [[f₀]]² = [[(p ≥ - R')]]², [[f₁]]² = [[(p ≥ -R'+u)]]², ..., [[f_{d-1}]]² = [[(p ≥ -R'+(d-1)u]]², et [[f_{L}]]² = [[(ρ ≥ -R+1)]]² à partir de la part <<ρ>>^{Q} ou de la part <<ρ>>^{p}, de la plage [R, R'], d'une valeur numérique u, et d'une valeur numérique d où u est un entier satisfaisant u ≤ M'-M+1 et d est un entier satisfaisant d ≥ plafond(((R'-R+1)/u)_{Re}), où (x/y)_{Re} représente la valeur de division de nombre réel pour deux nombres x, y ;
une deuxième étape de calcul de drapeau (S430) dans laquelle le système de décalage sécurisé calcule des parts <<f₁>>^{p}, <<f₂>>^{p}, ..., <<f_{d-1}>>^{p}, <<f_{L}>>^{p} à partir des parts [[f₁]]², [[f₂]]², ... [[f_{d-1}]]², [[f_{L}]]² ;
une étape de calcul de quantité de décalage (S440) dans laquelle le système de décalage sécurisé calcule une part <<ρ'>>^{p} = <<ρ>>^{p}+R'-u(Σ_{1≤i<d}<<fᵢ>>^{p})+((d-1)u-R')<<f_{L}>>^{p} à partir de la part <<ρ>>^{p}, des parts <<f₁>>^{p}, <<f₂>>^{p}, ..., <<f_{d-1}>>^{p}, <<f_{L}>>^{p}, de la valeur limite supérieure R' de la plage, de la valeur numérique u, et de la valeur numérique d ;
une étape de décalage à gauche (S450) dans laquelle le système de décalage sécurisé calcule une part [[b]]^{P} = [[2^{ρ}'a]]^{P} à partir de la part [[a]]^{P} et de la part <<ρ'>>^{p} ;
une étape de décalage à droite (S460) dans laquelle le système de décalage sécurisé calcule des parts [[c₀]]^{P} = [[2^{ρ'}a/2^{R'}]]^{P}, [[c₁]]^{P} = [[2^{ρ'}a/(2^{R'-u})]]^{P}, ..., [[c_{d-1}]]^{P} = [[2^{ρ'}a/ (2^{R'-(d-1)u})]]^{P} à partir de la part [[b]]^{P}, de la valeur limite supérieure R' de la plage, de la valeur numérique u, et de la valeur numérique d ;
une troisième étape de calcul de drapeau (S470) dans laquelle le système de décalage sécurisé calcule des parts [[f₀]]^{P}, [[f₁]]^{P}, ..., [[f_{d-1}]]^{P}, [[f_{L}]]^{P} à partir des parts [[f₀]]², [[f₁]]², ... [[f_{d-1}]]², [[f_{L}]]² ; et
une étape de calcul de valeur de décalage (S480) dans laquelle le système de décalage sécurisé calcule la part [[s]]^{P} = [[c₀]]^{P}[[f₀]]^{P}+([[c₁]]^{P}-[[c₀]]^{P})[[f₁]]^{P}+ ... + ([ [c_{d-1}]]^{P}-[[c_{d-2}]]^{P})[[f_{d-1}]]^{P}+([[b]]^{P}-[[c_{d-1}]]^{P})[[f_{L}]]^{P} à partir de la part [[b]]^{P}, des parts [[c₀]]^{P}, [[c₁]]^{P}, ..., [[c_{d-1}]]^{P}, et des parts [[f₀]]^{P}, [[f₁]]^{P}, ..., [[f_{d-1}]]^{P}, [[f_{L}]]^{P}.

4. Système de décalage sécurisé où P est un nombre premier, p est un nombre de bits du nombre premier P, Q est un ordre d'un anneau de facteur, M est une valeur limite supérieure qui peut être prise par la position MSB de valeurs numériques à entrer, et [[x]]^{y} et <<x>>^{y} représentent une part dans laquelle un élément mod y x est effectué par un partage de secret (k, n) et un partage de secret (k, n) répliqué, respectivement, où k est une valeur de seuil d'un partage de secret et n est un nombre de partage du partage de secret, le système de décalage sécurisé qui est configuré de trois appareils de décalage sécurisé ou plus et calcule une part [[s]]^{P} d'une valeur numérique s, où, s = 2^{ρ}a, obtenue en décalant une valeur numérique a de p bits à partir d'une part [[a]]^{P} de la valeur numérique a et d'une part <<ρ>>^{Q} de la quantité de décalage p, où, dans un cas de p ≥ 0, p représente le décalage à gauche, et dans un cas de p < 0, p représente le décalage à droite, le système de décalage sécurisé comprenant :
un moyen de conversion de module (210) pour calculer une part <<ρ>>^{p} à partir de la part <<ρ>>^{Q} ;
un premier moyen de calcul de drapeau (220) pour calculer une part [[f_{L}]]² = [[(p ≥ 0)]]² à partir de la part <<ρ>>^{Q} ou de la part <<ρ>>^{p} ;
un deuxième moyen de calcul de drapeau (230) pour calculer une part <<f_{L}>>^{p} à partir de la part [[f_{L}]]² ;
un moyen de calcul de quantité de décalage (240) pour calculer une part <<ρ'>>^{p} = <<ρ>>^{p}+M-M<<f_{L}>>^{p} à partir de la part <<ρ>>^{Q}, de la part <<f_{L}>>^{p}, et de la valeur limite supérieure M ;
un moyen de calcul de décalage à gauche (250) pour calculer une part [[b]]^{P} = [[2^{ρ'}a]]^{P} à partir de la part [[a]]^{P} et de la part <<ρ'>>^{p} ;
un moyen de décalage à droite (260) pour calculer une part [[c]]^{P} = [[2^{ρ'}a/2^{M}]]^{P} à partir de la part [[b]]^{P} et de la valeur limite supérieure M ;
un troisième moyen de calcul de drapeau (270) pour calculer une part [[f_{L}]]^{P} à partir de la part [[f_{L}]]² ; et
un moyen de calcul de valeur de décalage (280) pour calculer la part [[s]]^{P} = [[c]]^{P}+([[b]]^{P}-[[c]]^{P})[[f_{L}]]^{P} à partir de la part [[b]]^{P}, de la part [[c]]^{P}, et de la part [[f_{L}]]^{P}.

5. Programme pour amener un ordinateur à fonctionner en tant qu'appareil de décalage sécurisé selon la revendication 2.
